# EUROPEAN PATENT APPLICATION

(11) **EP 4 779 921 A1**
(43) Date of publication of application: **22.07.2026**
(21) Application number: 24884640.4
(22) Date of filing: 28.10.2024
(51) Int. Cl.: H04L 5/00

(54) **SOUNDING REFERENCE SIGNAL SENDING METHOD, RESOURCE CONFIGURATION METHOD, AND RELATED DEVICE**

(30) Priority: 31.10.2023 CN 202311443034
(71) Applicant: HUAWEI TECHNOLOGIES CO., LTD., Shenzhen 518129 (CN)
(72) Inventor: WANG, Xiaona, Shenzhen, Guangdong 518129 (CN); LIU, Fengwei, Shenzhen, Guangdong 518129 (CN); FAN, Bo, Shenzhen, Guangdong 518129 (CN); YANG, Bo, Shenzhen, Guangdong 518129 (CN)
(74) Representative: MERH-IP Matias Erny Reichl Hoffmann Patentanwälte PartG mbB
(86) International application number: PCT/CN2024/127643
(87) International publication number: WO 2025/092637

(57) **Abstract**

This application discloses a sounding reference signal sending method, a resource configuration method, and a related device. It may be applied to a scenario where there is a discrepancy between uplink and downlink antenna structures of a terminal device. In the method, the terminal device sends a first SRS using a first SRS resource configured by a network device, and sends a second SRS using a second SRS resource configured by the network device, where a transmit beam of the first SRS resource is different from a transmit beam of the second SRS resource. This satisfies a requirement for measuring downlink channel state information in a scenario where there is a discrepancy between the uplink and downlink antenna structures of the terminal device. Consequently, downlink transmission weights can be calculated, thereby implementing SRS-based downlink transmission and increase cell-level or UE-level capacity.

## Description

This application claims priority to Chinese Patent Application No. 202311443034.3, filed with the China National Intellectual Property Administration on October 31, 2023 and entitled "SOUNDING REFERENCE SIGNAL SENDING METHOD, RESOURCE CONFIGURATION METHOD, AND RELATED DEVICE", which is incorporated herein by reference in its entirety.

### TECHNICAL FIELD

This application relates to the field of wireless technologies, and in particular, to a sounding reference signal sending method, a resource configuration method, and a related device.

### BACKGROUND

Wireless communication refers to transmission and communication between two or more communication nodes propagated without conductors or cables or via an air interface. Such communication nodes include a network device and a terminal device. Generally, a terminal device may access a network device and receive scheduling and indication information from the network device to implement wireless communication.

In the new radio (new radio, NR) protocol, downlink channel measurement information may be obtained in two manners. Manner 1: A base station sends a downlink channel state information reference signal (channel state information reference signal, CSI-RS), and a terminal device performs channel estimation based on the CSI-RS to obtain a channel eigenvector. The channel eigenvector is quantized based on a predefined codebook and fed back to the base station in the form of a precoding matrix indicator (precoding matrix indicator, PMI). Constrained by feedback overhead, the quantized PMI suffers from quantization loss compared with an actual channel eigenvector. Manner 2: It is assumed that uplink and downlink channels are reciprocal. The base station configures an uplink sounding reference signal (sounding reference signal, SRS) resource for a terminal device. By receiving and measuring the uplink SRS, the base station performs uplink channel estimation, treats an estimated uplink receive channel as a downlink transmit channel, and calculates a downlink transmission weight.

With the massive surge in current communication requirements, a trend is to increase a quantity of physical antennas to achieve higher array gain, thereby improving coverage and capacity. However, due to cost constraints and limitations on maximum uplink transmit power in terminal devices, an effective implementation is to increase the quantity of physical antennas and digital downlink receive channels, while keeping a quantity of digital uplink transmit channels unchanged. This allows for high-rank, high-capacity downlink transmission and high-coverage uplink transmission. In this case, there is a discrepancy between uplink and downlink antenna structures of the terminal device. In other words, a quantity of physical antennas corresponding to each transmit antenna port is not equal to a quantity of physical antennas corresponding to each receive antenna port. It is important to note that this antenna structure is not currently supported by existing standards.

### SUMMARY

This application provides an SRS sending method and a related device. The proposed solution addresses scenarios where a terminal device uses asymmetric uplink and downlink antenna architectures. It provides a mechanism for SRS transmission that enables the network to calculate downlink transmission weights based on the SRS, implementing SRS-based downlink transmission and improving cell-level or user-level capacity.

A first aspect of this application provides an SRS sending method. The method is performed by a terminal device (or a terminal), the method is performed by some components (for example, a processor, a chip, or a chip system) in the terminal device, or the method may be implemented by a logic module or software that can implement all or some functions of the terminal device. In the first aspect and possible implementations of the first aspect, an example in which the method is performed by the terminal device is used for description. In the method, the terminal device receives first configuration information from a network device, where the first configuration information indicates a first SRS resource and a second SRS resource, the first configuration information is used for downlink channel state information measurement or indicates the terminal device to send an SRS in an antenna switching manner; and the terminal device sends a first SRS and a second SRS to the network device, where the first SRS resource is used to carry the first SRS, the second SRS resource is used to carry the second SRS, the first SRS resource is different from the second SRS resource, and a transmit beam of the first SRS resource is different from a transmit beam of the second SRS resource.

Based on the foregoing technical solution, the terminal device sends the first SRS by using the first SRS resource configured by the network device and sends the second SRS by using the second SRS resource configured by the network device, where the transmit beam of the first SRS resource is different from the transmit beam of the second SRS resource, so that a requirement of measuring downlink channel state information when there is a discrepancy between uplink and downlink antenna structures of the terminal device is satisfied. Further, a weight of sent downlink data is calculated to implement SRS-based downlink transmission and increase a cell-level or UE-level capacity.

Optionally, in a possible implementation of the first aspect, the method further includes: determining the first SRS resource and the second SRS resource based on the first configuration information.

In this possible implementation, the terminal device determines the first SRS resource and the second SRS resource by using the first configuration information delivered by the network device, and may send the SRSs on the first SRS resource and the second SRS resource by using different beams.

Optionally, in a possible implementation of the first aspect, the first SRS resource includes a first SRS port and a second SRS port, and the SRS resource includes a third SRS port and a fourth SRS port.

In this possible implementation, a port resource is configured, so that the terminal device can transmit an SRS by using the port resource, thereby helping the terminal device normally use an antenna port.

Optionally, in a possible implementation of the first aspect, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

In this possible implementation, downlink channel information may be obtained based on a minimum SRS resource requirement by limiting the foregoing resource condition. For example, SRSs are sent on different SRS resources by using orthogonal beams of a same antenna. When estimating a downlink channel weight, a base station obtains a channel autocorrelation matrix of a downlink transmit end on a base station side to cancel impact of the SRS transmit weight, so that it can be ensured that the network device can correctly estimate downlink channel information even if the network device does not sense an antenna structure of the terminal device. For another example, when the foregoing antenna ports are the same, an SRS beam may be sent through different weighting of the same antenna port, so that SRS transmit signal strength can be improved.

Optionally, in a possible implementation of the first aspect, the first configuration information further includes a third SRS resource, and a transmit antenna associated with the third SRS resource is different from transmit antennas associated with the first SRS resource and the second SRS resource.

In this possible implementation, the terminal device may send SRSs by using the first SRS resource, the second SRS resource, and the third SRS resource in a manner of combining antenna switching and beam switching, to obtain downlink channel information in a scenario in which a quantity of uplink co-transmission antennas is less than a quantity of downlink receive antennas.

Optionally, in a possible implementation of the first aspect, a guard symbol is configured between the foregoing different SRS resources, and at least one of the following is satisfied:
the first SRS resource and the third SRS resource are separated by at least Y symbols in the time domain; or
the second SRS resource and the third SRS resource are separated by the at least Y symbols in the time domain, where Y is an integer greater than or equal to 1.

In this possible implementation, the different SRS resources are separated by the at least Y symbols, to comply with a limitation of a current protocol on a guard interval. In this way, the implementation is compatible with the current protocol, thereby improving adaptability of the solution.

Optionally, in a possible implementation of the first aspect, a value of Y is related to a subcarrier spacing.

In this possible implementation, a value of Y complies with a current protocol. In this way, the implementation is compatible with the current protocol, thereby improving adaptability of the solution.

Optionally, in a possible implementation of the first aspect, before the foregoing step of receiving the first configuration information from the network device, the method further includes: sending capability information related to an antenna port of the terminal device.

In this possible implementation, the terminal device may report the capability information to enable the network device to better understand the terminal device, so that the terminal device obtains an SRS resource configuration more adaptive to the terminal device.

Optionally, in a possible implementation of the first aspect, the capability information includes at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain is different from a quantity of physical antennas associated with each transmit radio frequency chain of the terminal device; or
a downlink receive antenna structure of the terminal device is different from an uplink transmit antenna structure of the terminal device.

In this possible implementation, the terminal device may report the capability information specifically related to the antenna port, for example, parameters such as a quantity of uplink and downlink antenna ports, and whether a quantity of physical antennas to which a receive radio frequency chain is mapped is the same as a quantity of physical antennas to which a transmit radio frequency chain is mapped. In this way, the network device determines a capability of the terminal device, thereby improving resource configuration accuracy and improving resource configuration efficiency.

Optionally, in a possible implementation of the first aspect, the foregoing beamforming manner includes one or more of the following: digital domain beamforming, analog domain beamforming, and hybrid beamforming.

In this possible implementation, beamforming scenarios can be increased, thereby increasing an application scope of the solution.

Optionally, in a possible implementation of the first aspect, a quantity of guard symbols between the first SRS resource and the second SRS resource is less than Y symbols.

Further, a guard interval between different SRS resources configured when the network device senses the capability information of the terminal device may be less than the Y symbols. A guard interval between different SRS resources configured when the network device does not sense the capability information of the terminal device is greater than or equal to the Y symbols.

In this possible implementation, the guard interval is controlled to be less than the Y symbols, to reduce redundant resource configuration and reduce a resource waste. In addition, the network device may report the capability information related to the antenna port of the terminal device through the terminal device, to improve a sensing capability of the network device and resource configuration accuracy.

Optionally, in a possible implementation of the first aspect, the terminal device receives or sends a signal within the guard symbol.

In this possible implementation, different SRS signals are sent by using different beams by using a same antenna set. A symbol-level guard interval does not need to be introduced for switching between different beams by using the same antenna set. Therefore, if there is a guard interval between time domain resources occupied by different SRS resources configured by the network device, the terminal device may perform normal uplink sending and/or downlink receiving behavior within the guard interval, thereby improving resource utilization and a communication capability of the terminal device.

A second aspect of this application provides a resource configuration method. The method is performed by a network device, the method is performed by some components (for example, a processor, a chip, or a chip system) in the network device, or the method may be implemented by a logic module or software that can implement all or some functions of the network device. In the second aspect and possible implementations of the second aspect, an example in which the method is performed by the network device is used for description. In the method, first configuration information is sent to a terminal device, where the first configuration information indicates a first SRS resource and a second SRS resource, and the first configuration information is used to configure downlink channel state information measurement; and a first SRS and a second SRS that are sent by the terminal device are received, where the first SRS resource is used to carry the first SRS, the second SRS resource is used to carry the second SRS, and a transmit beam of the first SRS resource is different from a transmit beam of the second SRS resource.

Based on the foregoing technical solution, the network device may configure the first SRS resource and the second SRS resource for the terminal device, to satisfy a requirement of measuring downlink channel state information when there is a discrepancy between uplink and downlink antenna structures of the terminal device. Further, a weight of sent downlink data is calculated to implement SRS-based downlink transmission and increase a cell-level or UE-level capacity.

Optionally, in a possible implementation of the second aspect, the method further includes: determining the first configuration information.

Optionally, in a possible implementation of the second aspect, the foregoing step further includes: receiving capability information from the terminal device, where the capability information is related to an antenna port of the terminal device.

In this possible implementation, the network device may sense the capability information of the terminal device, to subsequently configure an SRS resource for a user, so that a requirement of measuring downlink channel state information when there is a discrepancy between uplink and downlink antenna structures of the terminal device may be satisfied. Further, a weight of sent downlink data is calculated to implement SRS-based downlink transmission and increase a cell-level or UE-level capacity.

Optionally, in a possible implementation of the second aspect, the capability information includes at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain is different from a quantity of physical antennas associated with each transmit radio frequency chain of the terminal device; or
a downlink receive antenna structure of the terminal device is different from an uplink transmit antenna structure of the terminal device.

In this possible implementation, the terminal device may report the capability information specifically related to the antenna port, for example, parameters such as a quantity of uplink and downlink antenna ports, and whether a quantity of physical antennas to which a receive radio frequency chain is mapped is the same as a quantity of physical antennas to which a transmit radio frequency chain is mapped. In this way, the network device determines a capability of the terminal device, thereby improving resource configuration accuracy and improving resource configuration efficiency.

Optionally, in a possible implementation of the second aspect, the foregoing beamforming manner includes one or more of the following: digital domain beamforming, analog domain beamforming, and hybrid beamforming.

In this possible implementation, beamforming scenarios can be increased, thereby increasing an application scope of the solution.

Optionally, in a possible implementation of the second aspect, the step of determining the first configuration information includes: determining the first configuration information based on the capability information of the terminal device.

In this possible implementation, the network device determines a capability of the terminal device, so that the network device can match the terminal device with the first configuration information related to the capability of the terminal device, thereby improving resource configuration accuracy and resource configuration efficiency.

Optionally, in a possible implementation of the second aspect, the foregoing step further includes: configuring, for the terminal device based on the capability information, a pilot resource used for beam management or a quasi co-location type QCL-typeD reference signal.

In this possible implementation, the network device may configure a corresponding pilot resource for the terminal device based on the capability information reported by the terminal device, so that the configured pilot resource satisfies an antenna system architecture of the terminal device.

Optionally, in a possible implementation of the second aspect, the foregoing step of configuring, for the terminal device based on the capability information, the pilot resource used for beam management and/or the quasi co-location type QCL-typeD reference signal includes:
when the beamforming manner of the transmit antenna port of the terminal device is hybrid beamforming and the beamforming manner of the receive antenna port of the terminal device is digital domain beamforming, configuring, for only uplink transmission, the pilot resource used for beam management and/or the QCL-typeD reference signal, and skipping configuring, for downlink transmission, the pilot resource used for beam management and/or the QCL-typeD reference signal.

In this possible implementation, when hybrid beamforming is used for uplink transmission and digital domain beamforming is used for downlink transmission, the pilot resource used for beam management and/or the QCL-typeD reference signal are/is configured for only uplink transmission, and the pilot resource used for beam management and/or the QCL-typeD reference signal are/is not configured for downlink transmission. This reduces a resource waste and improves resource utilization.

Optionally, in a possible implementation of the second aspect, a quantity of guard symbols between the first SRS resource and the second SRS resource is less than Y symbols.

In this possible implementation, the guard interval is controlled to be less than the Y symbols, to reduce redundant resource configuration and reduce a resource waste. In addition, the network device may report the capability information related to the antenna port of the terminal device through the terminal device, to improve a sensing capability of the network device and resource configuration accuracy.

Optionally, in a possible implementation of the second aspect, the guard symbol is used by the terminal device to receive or send a signal.

In this possible implementation, different SRS signals are sent by using different beams by using a same antenna set. A symbol-level guard interval does not need to be introduced for switching between different beams by using the same antenna set. Therefore, if there is a guard interval between time domain resources occupied by different SRS resources configured by the network device, the terminal device may perform normal uplink sending and/or downlink receiving behavior within the guard interval, thereby improving resource utilization and a communication capability of the terminal device.

Optionally, in a possible implementation of the second aspect, the first SRS resource includes a first SRS port and a second SRS port, and the second SRS resource includes a third SRS port and a fourth SRS port.

In this possible implementation, the network device configures a port resource by using the capability information of the terminal device, so that the terminal device can transmit an SRS by using the port resource, thereby helping the terminal device normally use an antenna port.

Optionally, in a possible implementation of the second aspect, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

In this possible implementation, downlink channel information may be obtained based on a minimum SRS resource requirement by limiting the foregoing resource condition. For example, SRSs are sent on different SRS resources by using orthogonal beams of a same antenna. When estimating a downlink channel weight, a base station obtains a channel autocorrelation matrix of a downlink transmit end on a base station side to cancel impact of the SRS transmit weight, so that it can be ensured that the network device can correctly estimate downlink channel information even if the network device does not sense an antenna structure of the terminal device. For another example, when the foregoing antenna ports are the same, an SRS beam may be sent through different weighting of the same antenna port, so that SRS transmit signal strength can be improved.

Optionally, in a possible implementation of the second aspect, the first configuration information further includes a third SRS resource, and a transmit antenna associated with the third SRS resource is different from transmit antennas associated with the first SRS resource and the second SRS resource.

In this possible implementation, the terminal device may send SRSs, by using the first SRS resource, the second SRS resource, and the third SRS resource that are configured by the network device, in a manner of combining antenna switching and beam switching, to obtain downlink channel information in a scenario in which a quantity of uplink co-transmission antennas is less than a quantity of downlink receive antennas.

Optionally, in a possible implementation of the second aspect, a guard symbol is configured between the foregoing different SRS resources, and at least one of the following is satisfied:
the first SRS resource and the third SRS resource are separated by at least Y symbols in the time domain; or
the second SRS resource and the third SRS resource are separated by the at least Y symbols in the time domain, where Y is an integer greater than or equal to 1.

In this possible implementation, the different SRS resources are separated by the at least Y symbols, to comply with a limitation of a current protocol on a guard interval. In this way, the implementation is compatible with the current protocol, thereby improving adaptability of the solution.

Optionally, in a possible implementation of the second aspect, a value of Y is related to a subcarrier spacing.

In this possible implementation, a value of Y complies with a current protocol. In this way, the implementation is compatible with the current protocol, thereby improving adaptability of the solution.

A third aspect of this application provides a communication apparatus. The apparatus is a terminal device, the apparatus is some components (for example, a processor, a chip, or a chip system) in the terminal device, or the apparatus may be a logic module or software that can implement all or some functions of the terminal device. The communication apparatus includes a transceiver unit.

The transceiver unit is configured to receive first configuration information from a network device, where the first configuration information indicates a first SRS resource and a second SRS resource, and the first configuration information is used for downlink channel state information measurement or indicates the terminal device to send an SRS in an antenna switching manner.

The transceiver unit is further configured to send a first SRS and a second SRS to the network device, where the first SRS resource is used to carry the first SRS, the second SRS resource is used to carry the second SRS, and a transmit beam of the first SRS resource is different from a transmit beam of the second SRS resource.

Optionally, in a possible implementation of the third aspect, the terminal device further includes a processing unit, configured to determine the first SRS resource and the second SRS resource based on the first configuration information.

Optionally, in a possible implementation of the third aspect, the first SRS resource includes a first SRS port and a second SRS port, and the second SRS resource includes a third SRS port and a fourth SRS port.

Optionally, in a possible implementation of the second aspect, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one antenna port of the first SRS resource is the same as a transmit antenna associated with at least one antenna port of the second SRS resource; or
a transmit beam associated with at least one antenna port of the first SRS resource is different from a transmit beam associated with at least one antenna port of the second SRS resource.

Optionally, in a possible implementation of the third aspect, the first configuration information further includes a third SRS resource, and a transmit antenna associated with the third SRS resource is different from transmit antennas associated with the first SRS resource and the second SRS resource.

Optionally, in a possible implementation of the third aspect, a guard symbol is configured between the different SRS resources, and at least one of the following is satisfied:
the first SRS resource and the third SRS resource are separated by at least Y symbols in the time domain; or
the second SRS resource and the third SRS resource are separated by the at least Y symbols in the time domain, where Y is an integer greater than or equal to 1.

Optionally, in a possible implementation of the third aspect, a value of Y is related to a subcarrier spacing.

Optionally, in a possible implementation of the third aspect, the transceiver unit is further configured to send capability information related to an antenna port of the terminal device.

Optionally, in a possible implementation of the third aspect, the capability information includes at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a downlink sending capability of the terminal device is different from an uplink receiving capability of the terminal device;
a quantity of downlink receive antenna ports of the terminal device is different from a quantity of uplink transmit antenna ports of the terminal device;
a quantity of physical antennas associated with each receive radio frequency chain is different from a quantity of physical antennas associated with each transmit radio frequency chain of the terminal device; or
a downlink receive antenna structure of the terminal device is different from an uplink transmit antenna structure of the terminal device.

Optionally, in a possible implementation of the third aspect, the foregoing beamforming manner includes one or more of the following: digital domain beamforming, analog domain beamforming, and hybrid beamforming.

Optionally, in a possible implementation of the third aspect, a quantity of guard symbols between the first SRS resource and the second SRS resource is less than Y symbols.

Optionally, in a possible implementation of the third aspect, the transceiver unit is further configured to receive or send a signal within the guard symbol.

A fourth aspect of this application provides a communication apparatus. The apparatus is a network device, the apparatus is some components (for example, a processor, a chip, or a chip system) in the network device, or the apparatus may be a logic module or software that can implement all or some functions of the network device. The communication apparatus includes a transceiver unit.

The transceiver unit is configured to send first configuration information to a terminal device, where the first configuration information indicates a first SRS resource and a second SRS resource, and the first configuration information is used to configure downlink channel state information measurement. The transceiver unit is further configured to receive a first SRS and a second SRS that are sent by the terminal device, where the first SRS resource is used to carry the first SRS, the second SRS resource is used to carry the second SRS, and a transmit beam of the first SRS resource is different from a transmit beam of the second SRS resource.

Optionally, in a possible implementation of the fourth aspect, the transceiver unit is further configured to receive capability information from the terminal device, where the capability information is related to an antenna port of the terminal device.

Optionally, in a possible implementation of the fourth aspect, the capability information includes at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain is different from a quantity of physical antennas associated with each transmit radio frequency chain of the terminal device; or
a downlink receive antenna structure of the terminal device is different from an uplink transmit antenna structure of the terminal device.

Optionally, in a possible implementation of the fourth aspect, the foregoing beamforming manner includes one or more of the following: digital domain beamforming, analog domain beamforming, and hybrid beamforming.

Optionally, in a possible implementation of the fourth aspect, the transceiver unit is further configured to configure, for the terminal device based on the capability information, a pilot resource used for beam management or a quasi co-location type QCL-typeD reference signal.

Optionally, in a possible implementation of the fourth aspect, the transceiver unit is specifically configured to: when the beamforming manner of the transmit antenna port of the terminal device is hybrid beamforming and the beamforming manner of the receive antenna port of the terminal device is digital domain beamforming, configure, for only uplink transmission, the pilot resource used for beam management and/or the QCL-typeD reference signal, and skip configure, for downlink transmission, the pilot resource used for beam management and/or the QCL-typeD reference signal.

Optionally, in a possible implementation of the fourth aspect, a quantity of guard symbols between the first SRS resource and the second SRS resource is less than Y symbols.

Optionally, in a possible implementation of the fourth aspect, the guard symbol is used by the terminal device to receive or send a signal.

Optionally, in a possible implementation of the fourth aspect, the first SRS resource includes a first SRS port and a second SRS port, and the second SRS resource includes a third SRS port and a fourth SRS port.

Optionally, in a possible implementation of the fourth aspect, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

Optionally, in a possible implementation of the fourth aspect, the first configuration information further includes a third SRS resource, and a transmit antenna associated with the third SRS resource is different from transmit antennas associated with the first SRS resource and the second SRS resource.

Optionally, in a possible implementation of the fourth aspect, a guard symbol is configured between the different SRS resources, and at least one of the following is satisfied:
the first SRS resource and the third SRS resource are separated by at least Y symbols in the time domain; or
the second SRS resource and the third SRS resource are separated by the at least Y symbols in the time domain, where Y is an integer greater than or equal to 1.

Optionally, in a possible implementation of the fourth aspect, a value of Y is related to a subcarrier spacing.

A fifth aspect of this application provides a communication apparatus, including at least one processor. The at least one processor is coupled to a memory, the memory is configured to store a program or instructions, and the at least one processor is configured to execute the program or the instructions, to enable the apparatus to implement the method in any one of the possible implementations of the first aspect.

A sixth aspect of this application provides a communication apparatus, including at least one processor. The at least one processor is coupled to a memory, the memory is configured to store a program or instructions, and the at least one processor is configured to execute the program or the instructions, to enable the apparatus to implement the method in any one of the possible implementations of the second aspect.

A seventh aspect of this application provides a communication apparatus, including at least one logic circuit and an input/output interface. The logic circuit is configured to perform the method according to any one of the possible implementations of the first aspect.

An eighth aspect of this application provides a communication apparatus, including at least one logic circuit and an input/output interface. The logic circuit is configured to perform the method according to any one of the possible implementations of the second aspect.

A ninth aspect of this application provides a communication system. The communication system includes the terminal device in any one of the possible implementations of the fifth aspect and the network device in any one of the possible implementations of the sixth aspect, or includes the terminal device in any one of the possible implementations of the seventh aspect and the network device in any one of the possible implementations of the eighth aspect.

A tenth aspect of this application provides a computer-readable storage medium. The storage medium is configured to store one or more computer-executable instructions. When the computer-executable instructions are executed by a processor, the processor performs the method according to any one of the possible implementations of either of the first aspect and the second aspect.

An eleventh aspect of this application provides a computer program product (or referred to as a computer program). When the computer program in the computer program product is executed by the processor, the processor performs the method according to any one of the possible implementations of either of the first aspect and the second aspect.

A twelfth aspect of this application provides a chip system. The chip system includes at least one processor, configured to support a communication apparatus in implementing the method according to any one of the possible implementations of either of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design manner in the third aspect to the twelfth aspect, refer to technical effects brought by different design manners in the first aspect and the second aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2 is another diagram of a communication system according to this application;
FIG. 3 is a diagram of sending an SRS signal according to this application;
FIG. 4 is a diagram of an SRS sending method according to this application;
FIG. 5 to FIG. 8 are several diagrams of resource configuration according to this application;
FIG. 9 to FIG. 12 are several diagrams of sending an SRS by a terminal device according to this application; and
FIG. 13 to FIG. 16 are several diagrams of a structure of a communication apparatus according to this application.

### DESCRIPTION OF EMBODIMENTS

The following clearly and completely describes the technical solutions in embodiments of this application with reference to the accompanying drawings in embodiments of this application.

First, some terms in embodiments of this application are described for ease of understanding by a person skilled in the art.

### 1. Beam (beam)

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated through a transmission configuration indicator state (transmission configuration indicator state, TCI-state) parameter or indicated through a spatial relation (spatial relation) parameter. Therefore, in this application, the beam may be replaced with the spatial domain filter, the spatial filter, the spatial domain parameter, the spatial parameter, the spatial domain setting, the spatial setting, the quasi-co-location (quasi-co-location, QCL) information, the QCL assumption, the QCL indication, the TCI-state (including an uplink (uplink, UL) TCI state, the downlink TCI state (downlink TCI state, DL TCI state)), the spatial relation, or the like. The foregoing terms are equivalent to each other. Alternatively, the beam may be replaced with another term representing the beam. This is not limited in this application.

A beam for sending a signal may be referred to as a transmit beam (transmit beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmit beam may be indicated by using the TCI-state. An uplink transmit beam may be indicated by using any one of the spatial relation (spatial relation), the TCI-state, or an SRS resource (representing using a transmit beam of the SRS). Therefore, the uplink transmit beam may alternatively be replaced with the SRS resource.

A beam for receiving a signal may be referred to as a receive beam (receive beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, the transmit beam may be signal strength distribution formed in different directions in space after a signal is transmitted through an antenna, and the receive beam may be signal strength distribution, in different directions in space, of a radio signal received from an antenna. It may be understood that, one beam may be associated with one or more physical antennas, and corresponds to one or more antenna ports. For example, for a CSI-RS resource used for beam management, one CSI-RS resource may include one or more ports, and one CSI-RS resource corresponds to one beam, in other words, all ports in a same CSI-RS resource correspond to a same beam.

When a low-frequency band or an intermediate-frequency band is used, a transmit end may send a signal in an omnidirectional manner or send a signal at a wide angle. However, when a high-frequency band is used, because of a small carrier wavelength in a high-frequency communication system, an antenna array including many antenna elements may be disposed at the transmit end and a receive end. The transmit end sends a signal by using a specific beamforming weight, so that the sent signal forms a spatially directional beam, and the receive end receives the signal by using the antenna array by using a specific beamforming weight. This helps increase received power of the signal at the receive end and resist a path loss.

A beam generally corresponds to a resource. For example, during beam measurement, a network device sends a signal on different resources by using different beams, and a terminal device feeds back measured signal quality of different resources, so that the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device through a TCI field in downlink control information (downlink control information, DCI).

Optionally, one beam may include one or more antenna ports, configured to transmit a data channel, a control channel, a sounding signal, and the like. The one or more antenna ports forming the beam may also be considered as one antenna port set.

The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

### 2. Antenna port

One antenna port may correspond to one physical antenna, or may correspond to a plurality of physical antennas. Different antenna ports may be different beams corresponding to a same physical antenna, correspond to different physical antennas, correspond to different physical antenna parts, or correspond to different pilot signals.

According to the definition of the 3rd generation partnership project (3rd generation partnership project, 3GPP) specification, the definition of the antenna port enables, from a channel for transmitting one symbol on a same antenna port, the inference of a channel for transmitting another symbol on the antenna port.

The "antenna port" in embodiments of this application refers to a "logical antenna port", unless "physical antenna port" is specified.

In addition, antenna ports are mapped to different quantities of physical antenna ports in different antenna architectures,

### 3. Antenna structure

The antenna structure may also be referred to as an antenna architecture, and is mainly used to represent a mapping relationship between an antenna port and a physical antenna. The mapping relationship may be one or more of the following:

A correspondence between the antenna port and the physical antenna is fixed;
a correspondence between the antenna port and the physical antenna is variable;
one antenna port is associated with a plurality of physical antennas;
one antenna port is associated with one physical antenna;
a quantity of physical antennas associated with one antenna port may be dynamically switched;
a digital beamforming (Digital beamforming, DBF) architecture, where the DBF architecture may be understood as implementing beamforming by performing weighting on a signal in a baseband digital domain;
an analog beamforming (analog beamforming, ABF) architecture, where the ABF architecture may be understood as implementing beamforming by performing weighting on a radio frequency signal (or by delaying a signal) by using a phase shifter and a gain controller at an antenna end; and
a hybrid beamforming (Hybrid beamforming, HBF) architecture, where the HBF architecture may be understood as a structure combining the foregoing DBF architecture and the foregoing ABF architecture.

### 4. Antenna port switching manner

The antenna port switching manner of a terminal device includes antenna switching, beam switching, and a combination of antenna switching and beam switching. The antenna switching means that the terminal device needs to control, by switching a switch, different physical antennas to send a signal. Beam switching refers to adjusting a weight of a physical antenna, or may be understood as sending a signal on a same physical antenna by using different weights. Generally, a switching switch used for antenna switching is usually a physical switch (which may also be referred to as a hard switch). Therefore, antenna switching requires a delay. Generally, a processing delay of Y symbols is set to be required between time-frequency domain resources used by different physical antennas (a value of Y is subsequently described, and details are not described herein). However, weight switching used for beam switching is a non-physical switch, and a processing delay is far less than a processing delay caused by physical switching. Therefore, a guard interval required in a beam switching case is far less than the Y symbols. In a current 3GPP protocol, beam switching may be completed in a cyclic prefix (cyclic prefix, CP) of each orthogonal frequency division multiplexing (orthogonal frequency division multiplexing, OFDM) symbol by default. Therefore, beam switching does not need to occupy an additional symbol resource as a guard interval.

In embodiments of this application, the DBF architecture may be used in a downlink, and the HBF architecture may be used in an uplink. Alternatively, the HBF architecture may be used in a downlink and the HBF architecture may be used in an uplink. However, mapping relationships between antenna ports and physical antennas are different in the uplink HBF architecture and the downlink HBF architecture.

### 5. Configuration and preconfiguration

In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used during transmission. Similar to the configuration, the preconfiguration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

6. The terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

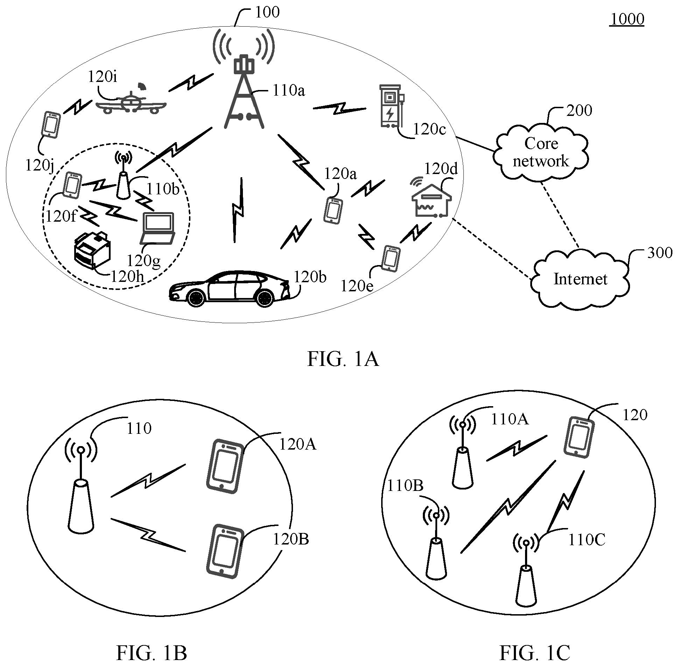

FIG. 1A is a diagram of an architecture of a communication system 1000 to which an embodiment of this application is applied. As shown in FIG. 1A, the communication system includes a radio access network (radio access network, RAN) 100 and a core network 200. Optionally, the communication system 1000 may further include an internet 300. The RAN 100 includes at least one RAN node (for example, 110a and 110b in FIG. 1A, collectively referred to as 110), and may further include at least one terminal (for example, 120a to 120j in FIG. 1A, collectively referred to as 120). The RAN 100 may further include another RAN node, for example, a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may further include the foregoing two or more different radio access systems. The RAN 100 may also be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation NodeB in a 6th generation (6th generation, 6G) mobile communication system, or a base station in a future mobile communication system. The RAN node may be a macro base station (for example, 110a in FIG. 1A), may be a micro base station or an indoor base station (for example, 110b in FIG. 1A), or may be a relay node or a donor node.

In another application scenario, a plurality of RAN nodes may cooperate to help a terminal implement radio access, and different RAN nodes respectively implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application.

In addition, the RAN node may also be referred to as a network device, and the network device is an apparatus that is deployed in a radio access network and that provides a wireless communication function for a terminal device. The network device may include various forms of macro base stations, micro base stations (also referred to as small cells), relay stations, access points, and the like. In systems using different radio access technologies, names of network devices may be different, for example, an eNB or an eNodeB (Evolved NodeB) in long term evolution (Long Term Evolution, LTE). The network device may alternatively be a radio controller in a cloud radio access network (Cloud Radio Access Network, CRAN) scenario. The network device may alternatively be a base station device in a future 5G network or a network device in a future evolved PLMN network. The network device may alternatively be a wearable device or a vehicle-mounted device. The network device may alternatively be a transmission reception point (Transmission Reception Point, TRP). In addition, in a network structure, the network device may include a central unit (central unit, CU) node, a distributed unit (distributed unit, DU) node, or a RAN device including a CU node and a DU node. For ease of description, the following is described by using an example in which a base station is used as the RAN node.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1A may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1A may each be referred to as a communication apparatus having a base station function, and 120a to 120j in FIG. 1A may each be referred to as a communication apparatus having a terminal function.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may alternatively be performed by a module (for example, a chip or a modem) in the terminal, or may be performed by an apparatus including the function of the terminal.

It may be understood that the RAN 100 is already described above, and includes at least one RAN node (for example, 110a and 110b in FIG. 1A, collectively referred to as 110), and may further include at least one terminal (for example, 120a to 120j in FIG. 1A, collectively referred to as 120).

In a possible implementation, the communication system shown in FIG. 1A may alternatively be shown in FIG. 1B, that is, include one RAN node 110 and a plurality of terminals (for example, 120A and 120B in FIG. 1B). In this case, a single RAN node may transmit data or control signaling to one or more terminals.

In another possible implementation, the communication system shown in FIG. 1A may alternatively be shown in FIG. 1C, that is, include a plurality of RAN nodes (for example, 110A, 110B, and 110C in FIG. 1C) 110 and one terminal 120. In this case, a plurality of RAN nodes may also simultaneously transmit data or control signaling for a single terminal.

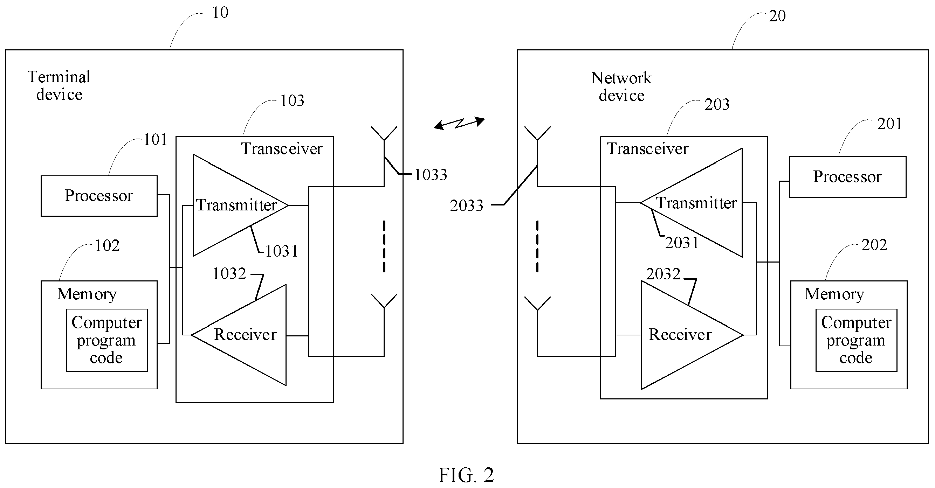

Communication between each network device and each terminal device in each communication system shown in FIG. 1A to FIG. 1C may alternatively be represented in another form. As shown in FIG. 2, a terminal device 10 includes a processor 101, a memory 102, and a transceiver 103, and the transceiver 103 includes a transmitter 1031, a receiver 1032, and an antenna 1033. A network device 20 includes a processor 201, a memory 202, and a transceiver 203, and the transceiver 203 includes a transmitter 2031, a receiver 2032, and an antenna 2033. The receiver 1032 may be configured to receive transmission control information by using the antenna 1033, and the transmitter 1031 may be configured to send transmission feedback information to the network device 20 by using the antenna 1033. The transmitter 2031 may be configured to send the transmission control information to the terminal device 10 by using the antenna 2033, and the receiver 2032 may be configured to receive, by using the antenna 2033, the transmission feedback information sent by the terminal device 10.

Currently, in an NR protocol, downlink channel measurement information may be obtained in the following two manners:
Manner 1: A base station sends a downlink CSI-RS, and a terminal device performs channel estimation based on the CSI-RS to obtain a channel eigenvector. The channel eigenvector is quantized based on a predefined codebook and fed back to the base station in the form of a PMI. Constrained feedback overhead, the quantized PMI suffers from quantization loss compared with an actual channel eigenvector.
Manner 2: It is assumed that uplink and downlink channels have reciprocity. A base station configures an uplink SRS resource for a terminal device. By receiving and measuring the uplink SRS, the base station performs uplink channel estimation and treats an estimated uplink receive channel as a downlink transmit channel.

Compared with Manner 1, in Manner 2, the downlink channel obtained based on the SRS has no quantization loss, and without considering an uplink and downlink reciprocity error, performance is better than that of the PMI fed back based on the CSI-RS.

The following describes in more detail Manner 2 in the above.

In a conventional technology, a correspondence between an uplink antenna port and a downlink antenna port is determined by using a UE capability reporting parameter "supportedSRS-xTyR", where y ≥ x, y indicates that a total quantity or a subset of receive antennas of UE is y antenna ports, and y may also be referred to as a quantity of antenna ports that may simultaneously perform receiving in downlink; and x indicates that an SRS may be sent on x antenna ports selected from the y antenna ports, and x may also be referred to as a quantity of antenna ports that may simultaneously perform sending in uplink. x may also be understood as a quantity of antenna ports that may simultaneously perform uplink transmission behavior, and y may also be understood as a total quantity of antenna ports that may perform the uplink transmission behavior.

When x = y, it is considered that a same antenna port is used for uplink sending and downlink receiving. When x < y, it is considered that an uplink transmit antenna port is a subset of a downlink receive antenna port. In this case, (rounded up to y/x) SRS resources need to be configured for a user, and a plurality of SRS resources are configured for the user. SRS signals are sent on different SRS resources by using different antenna ports. A base station side obtains uplink channel measurement information based on SRS signals sent by using the plurality of SRS resources, and treats, based on the assumption of uplink-downlink reciprocity, an estimated uplink receive channel as a downlink transmit channel.

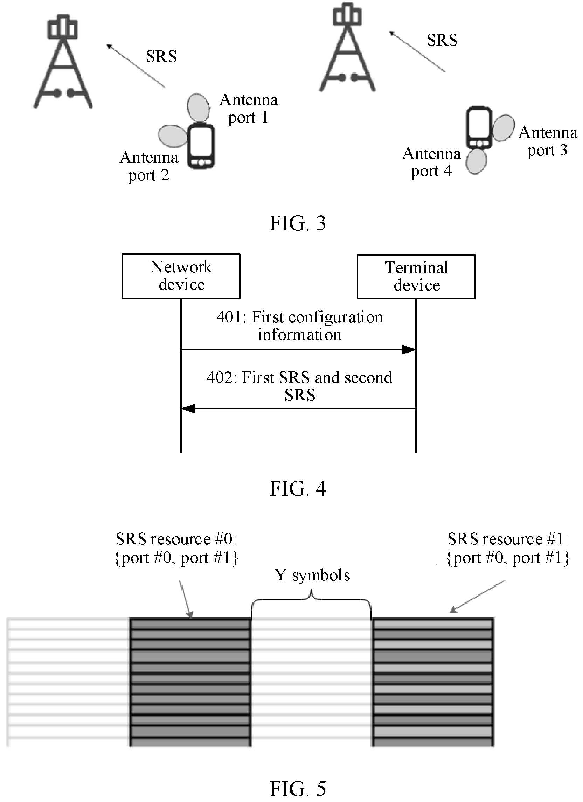

For example, in a 2T4R scenario shown in FIG. 3, an SRS resource set (resource set or resourceSet) with usage=antennaSwitching is configured for the user, and includes two SRS resources (resources). Each SRS resource includes two SRS ports. An antenna port 1 and an antenna port 2 are used to send SRS signals on a time-frequency resource allocated to a first SRS resource, and an antenna port 3 and an antenna port 4 are used to send SRS signals on a time-frequency resource allocated to a second SRS resource. The base station side performs SRS receiving measurement on the time-frequency resources allocated to the two SRS resources, estimates a downlink transmit channel, and calculates a downlink data transmission weight vector.

Considering an antenna switching processing time of the terminal device, a guard interval of Y symbols is configured between SRS resources on which sending is performed by using different antennas, where Y is an integer greater than or equal to 1. Specifically, if two SRS resources or SRS resource sets used for antenna switching are allocated to a same slot for transmission, slot resources occupied by the two SRS resources need to be separated by Y guard symbols for the user. If two SRS resources or SRS resource sets used for antenna switching are allocated to different slots for transmission, it is required that a last symbol occupied by a first SRS resource and a first symbol occupied by a second SRS resource need to be separated by Y guard symbols. On the Y guard symbols, the user does not transmit any signal.

Specifically, a value of Y is related to a subcarrier spacing, and is defined in a protocol in Table 1 below.

**Table 1**

| *µ* | Δ*f* = 2*^{µ}*·15 [kHz] | Y |
|---|---|---|
| 0 | 15 | 1 |
| 1 | 30 | 1 |
| 2 | 60 | 1 |
| 3 | 120 | 8 |
| 5 | 480 | 7 |
| 6 | 960 | 14 |

Δ*f* represents a subcarrier spacing, and *µ* represents a parameter set, and is used to describe a subcarrier spacing type.

A plurality of SRS resources are configured for a user for antenna switching. Each SRS resource corresponds to a specific antenna port subset for sending. There is no protocol limitation, and the user can determine the antenna port subset. For example, in the 2T4R scenario, the first SRS resource may correspond to the antenna port 1 and the antenna port 2 for sending SRS signals, and the second SRS resource may correspond to the antenna port 3 and the antenna port 4 for sending SRS signals; or the first SRS resource may correspond to the antenna port 1 and the antenna port 3 for sending SRS signals, and the second SRS resource may correspond to the antenna port 2 and the antenna port 4 for sending SRS signals.

However, with a large increase in current communication requirements, a trend is to satisfy the communication requirements by increasing a quantity of physical antennas. In addition, because a quantity or costs of antennas added on the terminal device is/are limited, it is more reasonable that the terminal and the base station use a manner similar to HBF in an uplink and use a manner similar to DBF in a downlink. However, this causes a discrepancy (or understood as a difference) between uplink and downlink antenna structures of the terminal device. To be specific, a quantity of physical antennas corresponding to each uplink transmit port is not equal to a quantity of physical antennas corresponding to each downlink receive port. This case is not supported in a current protocol. Therefore, how to perform downlink channel quality measurement when there is a discrepancy between uplink and downlink antenna structures of the terminal device is an urgent technical problem to be resolved.

To resolve the foregoing technical problem, an embodiment of this application provides an SRS sending method. When an uplink antenna architecture of a terminal device is asymmetric to a downlink antenna architecture of the terminal device, the terminal device sends a first SRS by using a first SRS resource configured by a network device and sends a second SRS by using a second SRS resource configured by the network device, where a transmit beam of the first SRS resource is different from a transmit beam of the second SRS resource, so that a requirement of measuring downlink channel state information when there is a discrepancy between uplink and downlink antenna structures of the terminal device is satisfied. Further, a weight of sent downlink data is calculated to implement SRS-based downlink transmission and increase a cell-level or UE-level capacity.

The SRS sending method provided in embodiments of this application is described below. The method may be performed by a terminal device/cloud device, or may be performed by a component (for example, a processor, a chip, or a chip system) of the terminal device/cloud device. Certainly, the method may alternatively be performed by a system including a cloud device and a terminal device.

FIG. 4 is a schematic flowchart of an SRS sending method according to an embodiment of this application. The method may include step 401 and step 402. The following describes in detail step 401 and step 402.

Step 401: A network device sends first configuration information to a terminal device. Correspondingly, the terminal device receives the first configuration information from the network device.

The network device sends the first configuration information to the terminal device to measure downlink channel state information. The first configuration information is used to configure an uplink SRS resource of the terminal device. In other words, the first configuration information is used for the downlink channel state information measurement or indicates the terminal device to send an SRS in an antenna switching manner, and the uplink SRS resource includes a first SRS resource and a second SRS resource.

This step may also be understood as follows: The network device configures the uplink SRS resource for the terminal device, so that the network device subsequently performs uplink channel estimation through uplink SRS receiving measurement, obtains a downlink transmit channel by equating or fine-tuning an estimated uplink receive channel, and then calculates a downlink transmission weight.

Optionally, the first SRS resource includes a first SRS port and a second SRS port, and the second SRS resource includes a third SRS port and a fourth SRS port. Alternatively, it is understood as that different resources are configured for a same SRS antenna port, so that the same SRS antenna port sends different SRSs on different resources by using different beams, in other words, the SRSs are sent on a same physical antenna by using different weights.

Optionally, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

Optionally, the first configuration information further indicates a third SRS resource, and a transmit antenna associated with the third SRS resource is different from transmit antennas associated with the first SRS resource and the second SRS resource. Alternatively, it is understood as that because the first SRS resource and the third SRS resource may relate to antenna switching, a transmit antenna of the first SRS resource is different from a transmit antenna of the third SRS resource. Similarly, because the second SRS resource and the third SRS resource may relate to antenna switching, a transmit antenna of the second SRS resource is different from a transmit antenna of the third SRS resource.

It may be understood as that, that transmit beams are different includes that transmit beams are orthogonal to each other and that transmit beams are not orthogonal to each other. Alternatively, it is understood as that beam orthogonality is a special example in which beams are different. Generally, beam orthogonality may be understood as that an inner product of weight vectors between beams is equal to 0.

Optionally, that transmit antennas are the same means that SRSs are sent by using a same physical antenna and different weights or a same weight. That transmit antennas are different means that SRSs are sent by using completely different or partially different physical antennas and different weights or a same weight. That transmit beams are different means that SRSs are sent by using a same physical antenna and different weights.

It may be understood as that, because antenna switching introduces processing delay caused by switching, the network device may configure a guard symbol between SRS resources for sending by the terminal device. Generally, at least Y guard symbols are configured as a guard interval. To be specific, the first SRS resource and the third SRS resource are separated by at least Y symbols, and/or the second SRS resource and the third SRS resource are separated by at least the Y symbols.

Further, when the first configuration information includes the first SRS resource, the second SRS resource, and the third SRS resource, the network device may configure a guard symbol between different SRS resources, and at least one of the following is satisfied: The first SRS resource and the third SRS resource are separated by the at least Y symbols in the time domain, and the second SRS resource and the third SRS resource are separated by the at least Y symbols in the time domain. Y is an integer greater than or equal to 1, and a value of Y is related to a subcarrier spacing. For details, refer to the descriptions corresponding to Table 1 in the foregoing. Details are not described herein again.

In a possible implementation, an SRS sending manner that is estimated by the network device and that is used by the terminal device is different from an actual sending manner of the terminal device. For example, the network device estimates that the terminal device sends an SRS in an antenna switching manner, but the terminal device actually sends the SRS in a beam switching manner or a manner of combining antenna switching and beam switching. In this case, the network device does not sense an antenna port capability that is of the terminal device and that is specifically related to sending or receiving. Antenna port capabilities for uplink sending and downlink receiving of the terminal device may be the same or may be different.

In another possible implementation, an SRS sending manner that is estimated by the network device and that is used by the terminal device is the same as an actual sending manner of the terminal device. For example, the network device estimates that the terminal device sends an SRS in an antenna switching manner, a beam switching manner, or a manner of combining antenna switching and beam switching, and the terminal device actually sends the SRS in a corresponding manner. In this case, optionally, the network device needs to sense an antenna port capability that is of the terminal device and that is specifically related to sending or receiving.

It should be noted that, how the network device senses an actual SRS sending manner of the terminal device may be pre-negotiated by the network device and the terminal device, or may be determined by receiving capability information that is related to an antenna port of the terminal device and that is reported by the terminal device, or may be another manner or the like. This is not specifically limited herein.

Optionally, the terminal device reports, to the network device, the capability information related to the antenna port of the terminal device. Correspondingly, the network device receives the capability information from the terminal device. The capability information includes at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain is different from a quantity of physical antennas associated with each transmit radio frequency chain of the terminal device; or
a downlink receive antenna structure of the terminal device is different from an uplink transmit antenna structure of the terminal device.

The beamforming manner includes one or more of the following: digital beamforming, analog beamforming, and hybrid beamforming.

In this embodiment of this application, there are a plurality of cases of the first configuration information. The following separately describes the cases.

In a first case, a guard interval between SRS resources configured by the network device for the terminal device is greater than or equal to Y guard symbols.

The network device configures (y/x) SRS resources for the terminal device, and an interval between time domain resources occupied by different SRS resources is greater than or equal to the Y guard symbols. For descriptions of x and y, refer to the foregoing descriptions. Details are not described herein again.

For ease of understanding, examples are provided below to describe the SRS resource.

Example 1: x = 2, and y = 4. The SRS resource in Example 1 may be shown in FIG. 5. A network device configures one SRS resource set for a terminal device. The SRS resource set includes two SRS resources: an SRS resource #0 and an SRS resource #1. Each SRS resource includes two SRS ports (ports): a port #1 and a port #2. A time domain symbol occupied by the SRS resource #0 and a time domain symbol occupied by the SRS resource #1 are separated by the Y guard symbols. In other words, the interval between an end symbol in a time domain resource occupied by the SRS resource #0 and a start symbol in a time domain resource occupied by the SRS resource #1 is the Y symbols.

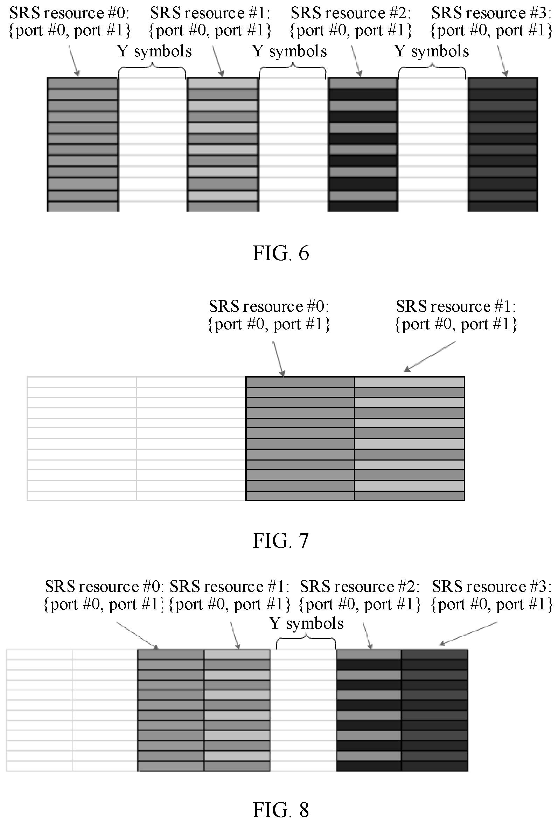

Example 2: x = 2, and y = 8. The SRS resource in Example 2 may be shown in FIG. 6. A network device configures one SRS resource set for a terminal device. The SRS resource set includes four SRS resources: an SRS resource #0, an SRS resource #1, an SRS resource #2, and an SRS resource #3. Each SRS resource includes two SRS ports: a port #1 and a port #2. A time domain symbol occupied by the SRS resource #0 and a time domain symbol occupied by the SRS resource #1 are separated by the Y guard symbols, a time domain symbol occupied by the SRS resource #1 and a time domain symbol occupied by the SRS resource #2 are separated by the Y guard symbols, and a time domain symbol occupied by the SRS resource #2 and a time domain symbol occupied by the SRS resource #3 are separated by the Y guard symbols.

Optionally, this manner is applicable to a case in which the network device is unaware of the asymmetry between an uplink antenna architecture and a downlink antenna architecture of the terminal device. Because the network device still configures a resource in an antenna switching manner, and antenna switching introduces processing delay caused by switching, the guard interval between the SRS resources configured by the network device for the terminal device in a conventional manner is greater than or equal to the Y guard symbols. The foregoing description of "aware" is described after step 402, and is not described herein.

In a second case, a guard interval between SRS resources configured by the network device for the terminal device is less than Y guard symbols.

The network device configures (y/x) SRS resources for the terminal device, and an interval between time domain resources occupied by different SRS resources is less than the Y guard symbols. For descriptions of x and y, refer to the foregoing descriptions. Details are not described herein again.

Optionally, in this manner, time domain symbols occupied by different SRS resources in a same SRS resource set are adjacent to each other.

For ease of understanding, the following uses an example to describe the SRS resource.

Example 3: x = 2, y = 4, and Y = 1. The SRS resource in Example 3 may be shown in FIG. 7. A network device configures one SRS resource set for a terminal device, and the SRS resource set includes two SRS resources: an SRS resource #0 and an SRS resource #1 respectively. Each SRS resource includes two SRS ports (ports): a port #1 and a port #2 respectively. A time domain symbol occupied by the SRS resource #0 is adjacent to a time domain symbol occupied by the SRS resource #1. In other words, an end symbol in a time domain resource occupied by the SRS resource #0 is adjacent to a start symbol in a time domain resource occupied by the SRS resource #1.

Optionally, this manner is applicable to a case in which the network device is aware of the asymmetry between an uplink antenna architecture and a downlink antenna architecture of the terminal device. Because the network device may configure a resource in a beam switching manner, and beam switching does not introduce processing delay caused by switching, and only needs to change a weighting vector, a processing delay is low. In this way, the guard interval between the SRS resources configured by the network device for the terminal device in the time domain is less than the Y guard symbols; in other words, guard symbols between the first SRS resource and the second SRS resource in the time domain are less than the Y symbols. In addition, the terminal device may receive or send a signal within the guard interval, so that resources can be fully utilized, thereby reducing a resource waste.

In a third case, a guard interval between some SRS resources configured by the network device for the terminal device in the time domain is greater than or equal to Y guard symbols, and a guard interval between some SRS resources configured by the network device for the terminal device in the time domain is less than the Y guard symbols.

The network device configures (y/x) SRS resources for the terminal device, where an interval between time domain resources occupied by some SRS resources is less than the Y guard symbols, and an interval between time domain resources occupied by some SRS resources is greater than or equal to the Y guard symbols. For descriptions of x and y, refer to the foregoing descriptions. Details are not described herein again.

Example 4: x = 2, and y = 8. The SRS resource in Example 4 may be shown in FIG. 8. A network device configures one SRS resource set for a terminal device. The SRS resource set includes four SRS resources: an SRS resource #0, an SRS resource #1, an SRS resource #2, and an SRS resource #3 respectively. Each SRS resource includes two SRS ports: a port #1 and a port #2 respectively. A time domain symbol occupied by the SRS resource #0 is adjacent to a time domain symbol occupied by the SRS resource #1. A time domain symbol occupied by the SRS resource #1 and a time domain symbol occupied by the SRS resource #2 are separated by the Y guard symbols. A time domain symbol occupied by the SRS resource #2 is adjacent to a time domain symbol occupied by the SRS resource #3.

Optionally, this manner is applicable to a case in which the network device is aware of the asymmetry between an uplink antenna architecture and a downlink antenna architecture of the terminal device.

It may be understood that the foregoing several cases are merely examples. During actual application, there may be another case. For example, a plurality of SRS resources may alternatively belong to different SRS resource sets. For another example, a quantity of configured SRS resources is not (y/x), but is another value specified according to a new protocol. For another example, the Y guard symbols are set according to another value specified in a new protocol. This is not specifically limited herein.

Step 402: The terminal device sends a first SRS and a second SRS to the network device. Correspondingly, the network device receives the first SRS and the second SRS from the terminal device.

The terminal device sends the first SRS and the second SRS to the network device based on the first configuration information, where the first SRS resource is used to carry the first SRS, the second SRS resource is used to carry the second SRS, and a transmit beam of the first SRS resource is different from a transmit beam of the second SRS resource.

Optionally, this corresponds to a case in which the first SRS resource includes a first SRS port and a second SRS port, and the second SRS resource includes a third SRS port and a fourth SRS port. The terminal device sends a corresponding beam by using the first SRS port and the second SRS port.

Optionally, a physical antenna associated with the first SRS port of the first SRS resource is the same as a physical antenna associated with the third SRS port of the second SRS resource, a physical antenna associated with the second SRS port of the first SRS resource is the same as a physical antenna associated with the fourth SRS port of the second SRS resource, and a physical antenna associated with the first SRS port of the first SRS resource is different from a physical antenna associated with the fourth SRS port of the second SRS resource.

Optionally, a transmit beam of the first SRS port of the first SRS resource is orthogonal to a transmit beam of the third SRS port of the second SRS resource, and a transmit beam of the second SRS port of the first SRS resource is orthogonal to a transmit beam of the fourth SRS port of the second SRS resource. Beam orthogonality means that an inner product of weight vectors between beams is equal to 0.

Optionally, when the network device senses the capability information related to the antenna port of the terminal device, that the network device configures a corresponding pilot resource for uplink and downlink transmission includes: When the terminal device uses a DBF architecture, a beam sweeping and/or a QCL-type D (typeD) indication ('typeD':{Spatial Rx parameter}, indicating a spatial domain receiving parameter of a receive end) does not need to be configured, and/or when the terminal device uses an HBF architecture, beam sweeping needs to be configured and/or a QCL-typeD indication needs to be configured for receiving and sending behavior.

Optionally, the network device configures, for the terminal device based on the capability information related to the antenna port of the terminal device, a pilot resource used for beam management and/or a quasi co-location type QCL-typeD reference signal. For example, when the beamforming manner of the transmit antenna port of the terminal device is hybrid beamforming, and the beamforming manner of the receive antenna port of the terminal device is digital domain beamforming, the network device configures, for uplink transmission, the pilot resource used for beam management and/or the QCL-typeD reference signal, and does not configure, for downlink transmission, the pilot resource used for beam management and/or the QCL-typeD reference signal.

In this embodiment of this application, the terminal device may send an SRS in the beam switching manner, or in a manner of combining beam switching and antenna switching. This is not specifically limited herein. It may be understood that, to match a manner in a conventional technology, the terminal device may alternatively send the SRS in an antenna switching manner. The following describes the foregoing several SRS sending manners.

In a first manner, an SRS is sent in the beam switching manner.

In this manner, the terminal device sends, based on a first beam, an SRS corresponding to the first SRS port of the first SRS resource, sends, based on a second beam, an SRS corresponding to the second SRS port of the first SRS resource, sends, based on a third beam, an SRS corresponding to the third SRS port of the second SRS resource, and sends, based on a fourth beam, an SRS corresponding to the fourth SRS port of the second SRS resource. It should be noted that the first SRS port of the first SRS resource and the third SRS port of the second SRS resource may be the same or different. Similarly, the second SRS port of the first SRS resource and the fourth SRS port of the second SRS resource may be the same or different.

Optionally, a weighting vector of the first beam and a weighting vector of the third beam are different or orthogonal, and a weighting vector of the second beam and a weighting vector of the fourth beam are different or orthogonal.

This manner may also be understood as that SRS signals are sent by using a same physical antenna set and different beams on different SRS resources.

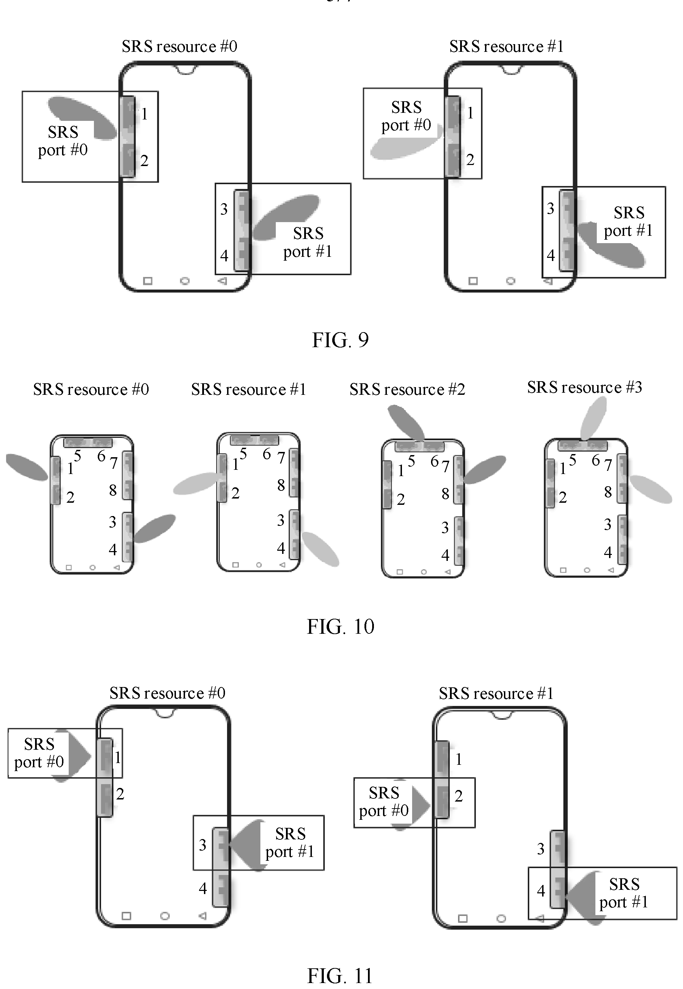

For example, it is assumed that x = 2 and y = 4. That the terminal device sends an SRS in the beam switching manner is shown in FIG. 9. The terminal device uses four antenna ports for downlink receiving, and uses two antenna ports for uplink sending. Each downlink antenna port is associated with one physical antenna, and each uplink antenna port is associated with two physical antennas. An SRS signal is sent based on a weighting vector W1 by using a physical antenna 1 and a physical antenna 2 on a time-frequency domain resource allocated to an SRS port #0 of an SRS resource #0, an SRS signal is sent based on a weighting vector W2 by using a physical antenna 3 and a physical antenna 4 on a time-frequency domain resource allocated to an SRS port #1 of the SRS resource #0, an SRS signal is sent based on a weighting vector W3 by using the physical antenna 1 and the physical antenna 2 on the time-frequency domain resource allocated to the SRS port #0 of an SRS resource #1, and an SRS signal is sent based on a weighting vector W4 by using the physical antenna 3 and the physical antenna 4 on the time-frequency domain resource allocated to the SRS port #1 of the SRS resource #1.

Optionally, the weighting vectors W1 and W3 are orthogonal, and the weighting vectors W2 and W4 are orthogonal.

Optionally, one of W3 and W1 is the same as one of the W2 and W4 weighting vectors.

Optionally, a radio frequency channel (RF chain) corresponding to the SRS port #0 is associated with both the physical antenna 1 and the physical antenna 2, a radio frequency channel corresponding to the SRS port #0 is associated with both the physical antenna 3 and the physical antenna 4, and different SRS signals are sent by using different weights of a same antenna set (to be specific, the physical antenna 1, the physical antenna 2, the physical antenna 3, and the physical antenna 4). Because switching between the different weights of the same antenna set does not need to introduce a symbol-level guard interval, if there is a guard interval between time domain resources occupied by different SRS resources configured by the network device, the terminal device may perform normal uplink sending and/or downlink receiving behavior within the guard interval, thereby improving resource utilization.

In a second manner, an SRS is sent in the manner of combining beam switching and antenna switching.

In this manner, the terminal device sends, based on a first antenna set, SRSs corresponding to the first SRS resource and the second SRS resource, and sends, based on a second antenna set, an SRS corresponding to the third SRS resource. For example, the terminal device sends, based on a first antenna subset of the first antenna set, SRSs corresponding to the first SRS port of the first SRS resource and the third SRS port of the second SRS resource, sends, based on a second antenna subset of the first antenna set, SRSs corresponding to the second SRS port of the first SRS resource and the fourth SRS port of the second SRS resource, sends, based on the first antenna subset of the second antenna set, an SRS corresponding to the first SRS port of the third SRS resource, and sends, based on the second antenna subset of the second antenna set, an SRS corresponding to the second SRS port of the third SRS resource. Physical antennas associated with the first antenna set are partially different from or completely different from physical antennas associated with the second antenna set.

This manner may also be understood as sending an SRS signal by using different antennas + a same weight or by using a same antenna + different weights.

For example, it is assumed that x = 2 and y = 8. That the terminal device sends an SRS in the manner of combining beam switching and antenna switching is shown in FIG. 10. The terminal device uses eight antenna ports for downlink receiving and uses two antenna ports for uplink sending. Each downlink antenna port is associated with one physical antenna, and each uplink antenna port is associated with two physical antennas. An SRS signal is sent based on a weighting vector W1 by using a physical antenna 1 and a physical antenna 2 on a time-frequency domain resource allocated to an SRS port #0 of an SRS resource #0, an SRS signal is sent based on a weighting vector W2 by using a physical antenna 3 and a physical antenna 4 on a time-frequency domain resource allocated to an SRS port #1 of the SRS resource #0, an SRS signal is sent based on a weighting vector W3 by using the physical antenna 1 and the physical antenna 2 on a time-frequency domain resource allocated to an SRS port #0 of an SRS resource #1, an SRS signal is sent based on a weighting vector W4 by using the physical antenna 3 and the physical antenna 4 on a time-frequency domain resource allocated to an SRS port #1 of the SRS resource #1, an SRS signal is sent based on a weighting vector W5 by using a physical antenna 5 and a physical antenna 6 on a time-frequency domain resource allocated to an SRS port #0 of an SRS resource #2, an SRS signal is sent based on a weighting vector W6 by using a physical antenna 7 and a physical antenna 8 on a time-frequency domain resource allocated to an SRS port #1 of the SRS resource #2, an SRS signal is sent based on a weighting vector W7 by using the physical antenna 5 and the physical antenna 6 on a time-frequency domain resource allocated to an SRS port #0 of an SRS resource #3, and an SRS signal is sent based on a weighting vector W8 by using the physical antenna 7 and the physical antenna 8 on a time-frequency domain resource allocated to an SRS port #1 of the SRS resource #3.

Optionally, the weighting vectors W1 and W3 are orthogonal, the weighting vectors W2 and W4 are orthogonal, the weighting vectors W5 and W7 are orthogonal, the weighting vectors W6 and W8 are orthogonal, and the weighting vectors W1, W2, W3, W4, W5, W6, W7 and W8 are partially the same.

Optionally, a radio frequency channel corresponding to a first SRS port of the SRS resource #0 is associated with both the physical antenna 1 and the physical antenna 2, a radio frequency channel corresponding to a second SRS port of the SRS resource #0 is associated with both the physical antenna 3 and the physical antenna 4, and so on.

Optionally, on the SRS resource #0 and the SRS resource #1, an SRS signal is sent by using a same antenna set and different weights, and/or on the SRS resource #2 and the SRS resource #3, an SRS signal is sent by using a same antenna set and different weights. A symbol-level guard interval does not need to be introduced for switching between different weights of a same antenna set. Therefore, if there is a guard interval between time domain resources occupied by the SRS resource #0 and the SRS resource #1 that are configured by the network device, or there is a guard interval between time domain resources occupied by the SRS resource #2 and the SRS resource #3, the terminal device may perform normal uplink sending or downlink receiving within the guard interval, thereby improving resource utilization.

For example, an SRS signal is sent by using different antennas on the SRS resource #0 and the SRS resource #2 or the SRS resource #3, and a transmit antenna of the SRS signal is dynamically selected through switching. Switching of an antenna associated with a transmit channel requires a processing delay of Y symbols. If there is a guard interval between time domain resources occupied by the SRS resource #0 and the SRS resource #2, the SRS resource #0 and the SRS resource #3, the SRS resource #1 and the SRS resource #2, or the SRS resource #1 and the SRS resource #3 that are configured by the network device, the terminal device does not perform any uplink sending or downlink receiving behavior within the guard interval.

In a third manner, an SRS is sent in the antenna switching manner.

This case is intended to improve integrity of the solution, or to facilitate adaptation to a conventional technology.

In this manner, the terminal device sends, based on the first antenna set, SRSs corresponding to the first SRS port and the second SRS port of the first SRS resource, and sends, based on the second antenna set, SRSs corresponding to the third SRS port and the fourth SRS port of the second SRS resource.

This manner may also be understood as that SRS signals are sent by using different antennas.

For example, it is assumed that x = 2 and y = 4. That the terminal device sends the SRS in the antenna switching manner may be shown in FIG. 11. The terminal device uses four antenna ports for downlink receiving and uses two antenna ports for uplink sending. Each antenna port may be associated with one physical antenna. An SRS signal is sent by using a physical antenna 1 on a time-frequency domain resource allocated to an SRS port #0 of an SRS resource #0, an SRS signal is sent by using a physical antenna 3 on a time-frequency domain resource allocated to an SRS port #1 of the SRS resource #0, an SRS signal is sent by using a physical antenna 2 on a time-frequency domain resource allocated to an SRS port #0 of an SRS resource #1, and an SRS signal is sent by using a physical antenna 4 on a time-frequency domain resource allocated to an SRS port #1 of the SRS resource #1.

Optionally, the physical antenna 1 and the physical antenna 2 are connected to a same radio frequency channel, and whether the physical antenna 1 or the physical antenna 2 is used to send a signal on the transmit channel is dynamically selected through switching. The physical antenna 3 and the physical antenna 4 are connected to a same radio frequency channel, and whether the physical antenna 3 or the physical antenna 4 is used to send a signal on the transmit channel is dynamically selected through switching. Switching of an antenna associated with the transmit channel requires a processing delay of Y symbols, and in this period, the terminal device does not perform any uplink sending or downlink receiving behavior.

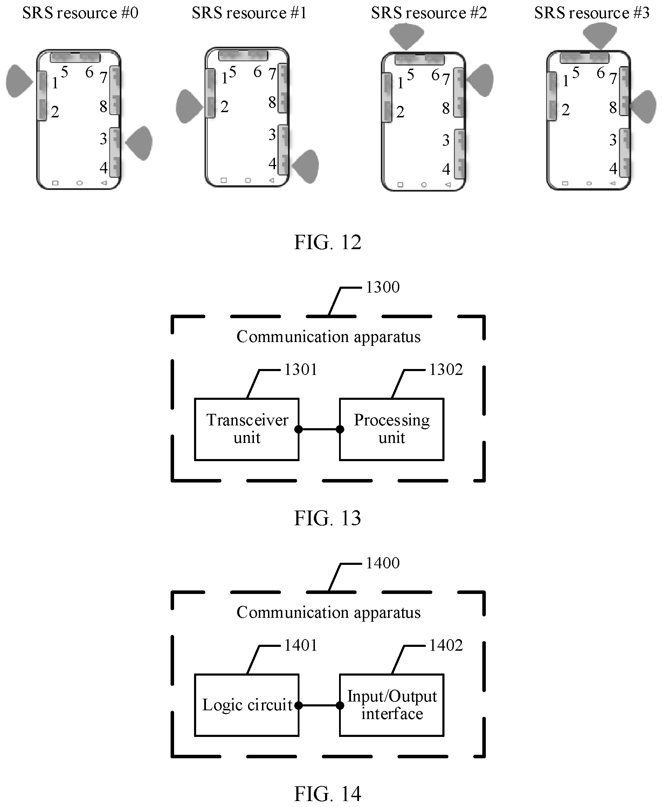

For example, it is assumed that x = 2 and y = 8. That the terminal device sends an SRS in an antenna switching manner may be shown in FIG. 12. The terminal device uses eight antenna ports for downlink receiving and two antenna ports for uplink sending. Each antenna port may be associated with one physical antenna. An SRS signal is sent by using a physical antenna 1 on a time-frequency domain resource allocated to an SRS port #0 of an SRS resource #0, an SRS signal is sent by using a physical antenna 3 on a time-frequency domain resource allocated to an SRS port #1 of the SRS resource #0, an SRS signal is sent by using a physical antenna 2 on a time-frequency domain resource allocated to an SRS port #0 of an SRS resource #1, an SRS signal is sent by using a physical antenna 4 on a time-frequency domain resource allocated to an SRS port #1 of the SRS resource #1, an SRS signal is sent by using a physical antenna 5 on a time-frequency domain resource allocated to an SRS port #0 of an SRS resource #2, an SRS signal is sent by using a physical antenna 7 on a time-frequency domain resource allocated to an SRS port #1 of the SRS resource #2, an SRS signal is sent by using a physical antenna 6 on a time-frequency domain resource allocated to an SRS port #0 of an SRS resource #3, and the SRS signal is sent by using a physical antenna 8 on a time-frequency domain resource allocated to an SRS port #1 of the SRS resource #3. Optionally, the physical antenna 1 and the physical antenna 2 are connected to a same radio frequency channel, and whether the physical antenna 1 or the physical antenna 2 is used to send a signal on the transmit channel is dynamically selected through switching; the physical antenna 3 and the physical antenna 4 are connected to a same radio frequency channel, and whether the physical antenna 3 or the physical antenna 4 is used to send a signal on the transmit channel is dynamically selected through switching; and so on. Switching of an antenna associated with the transmit channel requires a processing delay of Y symbols, and in this period, the terminal device does not perform any uplink sending or downlink receiving behavior.

It may be understood that, in the foregoing example, each antenna port may be associated with a plurality of physical antennas, x may be another value, y may be another value, or the like. This is not specifically limited herein.

In this embodiment of this application, according to one aspect, when an uplink antenna architecture of the terminal device is asymmetric to a downlink antenna architecture of the terminal device, the first SRS is sent by using the first SRS resource configured by the network device, and the second SRS is sent by using the second SRS resource configured by the network device, where a transmit beam of the first SRS resource is different from a transmit beam of the second SRS resource, so that a requirement of measuring downlink channel state information when there is a discrepancy between the uplink and downlink antenna structures of the terminal device is satisfied. Further, a weight of sent downlink data is calculated to implement SRS-based downlink transmission and increase a cell-level or UE-level capacity.

According to another aspect, different SRS signals are sent by using different weights of a same antenna set. Switching between different weights of the same antenna set does not require a symbol-level guard interval. Therefore, if there is a guard interval between time domain resources occupied by different SRS resources configured by the network device, the terminal device may perform normal uplink sending and/or downlink receiving within the guard interval, thereby improving resource utilization and a communication capability of the terminal device.

According to another aspect, the network device may report capability information related to an antenna port of the terminal device by using the terminal device, to improve a sensing capability of the network device and resource configuration accuracy, thereby reducing redundant resource configuration and reducing a resource waste.

According to another aspect, when the terminal device uses a DBF architecture, beam sweeping and a QCL-typeD indication do not need to be configured, thereby reducing configuration information content.

According to another aspect, in the method provided in this application, antenna switching may be further combined with a beam antenna, to send an SRS in a plurality of possible manners, so that subsequent SRS-based downlink calculation is more comprehensive, thereby improving communication quality.

The foregoing describes the SRS sending method in embodiments of this application. The following describes a communication apparatus in embodiments of this application. FIG. 13 is an embodiment of a communication apparatus 1300 in an embodiment of this application. The communication apparatus 1300 may implement functions of the communication apparatus (where the communication apparatus is a terminal device) in the foregoing method embodiments, and therefore can also implement beneficial effects of the foregoing method embodiments. In this embodiment of this application, the communication apparatus 1300 may be a communication apparatus, or may be an integrated circuit, an element, or the like inside the communication apparatus, for example, a chip. The communication apparatus 1300 includes a transceiver unit 1301 and a processing unit 1302.

In a possible implementation, the communication apparatus 1300 is the terminal device in the embodiments shown in FIG. 1A to FIG. 12. In this case, functions of the units are as follows:
a transceiver unit 1301, configured to receive first configuration information from a network device, where the first configuration information indicates a first SRS resource and a second SRS resource, the first configuration information is used to configure an uplink SRS resource of the terminal device, and the uplink SRS resource is used for downlink channel state information measurement or indicates the terminal device to send an SRS in an antenna switching manner; and
a processing unit 1302, configured to generate a first SRS and a second SRS, where
the transceiver unit 1301 is further configured to send the first SRS and the second SRS to the network device, where the first SRS resource is used to carry the first SRS, the second SRS resource is used to carry the second SRS, the first SRS resource is different from the second SRS resource, and a transmit beam of the first SRS resource is different from a transmit beam of the second SRS resource.

Optionally, the first SRS resource includes a first SRS port and a second SRS port, and the second SRS resource includes a third SRS port and a fourth SRS port.

Optionally, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

Optionally, the first configuration information further indicates a third SRS resource, and a transmit antenna associated with the third SRS resource is different from transmit antennas associated with the first SRS resource and the second SRS resource.

Optionally, a guard symbol is configured between different SRS resources, and at least one of the following is satisfied:
the first SRS resource and the third SRS resource are separated by at least Y symbols in the time domain; or
the second SRS resource and the third SRS resource are separated by the at least Y symbols in the time domain, where
Y is an integer greater than or equal to 1.

Optionally, a value of Y is related to a subcarrier spacing.

Optionally, the transceiver unit 1301 is further configured to send capability information related to an antenna port of the terminal device.

Optionally, the capability information includes at least one of the following:
a beamforming manner of a receive antenna port of the communication apparatus is different from a beamforming manner of a transmit antenna port of the communication apparatus;
a quantity of transmit antennas associated with one uplink pilot port of the communication apparatus is not equal to a quantity of receive antennas associated with one downlink pilot port of the communication apparatus;
a downlink sending capability of the communication apparatus is different from an uplink receiving capability of the communication apparatus;
a quantity of downlink receive antenna ports of the communication apparatus is different from a quantity of uplink transmit antenna ports of the communication apparatus;
a quantity of physical antennas associated with each receive radio frequency chain is different from a quantity of physical antennas associated with each transmit radio frequency chain of the communication apparatus; or
a downlink receive antenna structure of the communication apparatus is different from an uplink transmit antenna structure of the communication apparatus.

Optionally, the beamforming manner includes one or more of the following: digital domain beamforming, analog domain beamforming, and hybrid beamforming.

Optionally, a quantity of guard symbols between the first SRS resource and the second SRS resource is less than Y symbols.

Optionally, the transceiver unit 1301 is further configured to receive or send a signal within the guard symbol.

In this embodiment, operations performed by the units in the communication apparatus are similar to the descriptions of the terminal device in the embodiments shown in FIG. 1A to FIG. 12, and details are not described herein again.

In this embodiment, when an uplink antenna architecture of the terminal device is asymmetric to a downlink antenna architecture of the terminal device, the first SRS is sent by using the first SRS resource configured by the network device, and the second SRS is sent by using the second SRS resource configured by the network device. In addition, sending spatial filtering on the first SRS resource is different from sending spatial filtering on the second SRS resource, so that a requirement of measuring downlink channel state information when there is a discrepancy between the uplink and downlink antenna structures of the terminal device is satisfied. Further, a weight of sent downlink data is calculated to implement SRS-based downlink transmission and increase a cell-level or UE-level capacity. According to another aspect, different SRS signals are sent by using different weights of a same antenna set. Switching between different weights of the same antenna set does not require a symbol-level guard interval. Therefore, if there is a guard interval between time domain resources occupied by different SRS resources configured by the network device, the terminal device may perform normal uplink sending and/or downlink receiving within the guard interval, thereby improving resource utilization and a communication capability of the terminal device. According to another aspect, the network device may report capability information related to an antenna port of the terminal device by using the terminal device, to improve a sensing capability of the network device and resource configuration accuracy, thereby reducing redundant resource configuration and reducing a resource waste. According to another aspect, when the terminal device uses a DBF architecture, beam sweeping and a QCL-typeD indication do not need to be configured, thereby reducing configuration information content. According to another aspect, in the method provided in this application, antenna switching may be further combined with a beam antenna, to send an SRS in a plurality of possible manners, so that subsequent SRS-based downlink calculation is more comprehensive, thereby improving communication quality.

In another possible implementation, the communication apparatus 1300 is the network device in the embodiments shown in FIG. 1A to FIG. 12. In this case, functions of the units are as follows:
a transceiver unit 1301, configured to send first configuration information to a terminal device, where the first configuration information indicates a first SRS resource and a second SRS resource, and the first configuration information is used to configure downlink channel state information measurement, where
the transceiver unit 1301 is further configured to receive a first SRS and a second SRS that are sent by the terminal device, where the first SRS resource is used to carry the first SRS, the second SRS resource is used to carry the second SRS, and a transmit beam of the first SRS resource is different from a transmit beam of the second SRS resource; and
a processing unit 1302, configured to determine the first configuration information.

Optionally, the transceiver unit 1301 is further configured to receive capability information from the terminal device, where the capability information is related to an antenna port of the terminal device.

Optionally, the capability information includes at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain is different from a quantity of physical antennas associated with each transmit radio frequency chain of the terminal device; or
a downlink receive antenna structure of the terminal device is different from an uplink transmit antenna structure of the terminal device.

Optionally, the processing unit 1302 is further configured to determine the first configuration information based on the capability information of the terminal device.

Optionally, the foregoing beamforming manner includes one or more of the following: digital domain beamforming, analog domain beamforming, and hybrid beamforming.

Optionally, the transceiver unit 1301 is further configured to configure, for the terminal device based on the capability information, a pilot resource used for beam management or a quasi co-location type QCL-typeD reference signal.

Optionally, the transceiver unit 1301 is specifically configured to: when the beamforming manner of the transmit antenna port of the terminal device is hybrid beamforming and the beamforming manner of the receive antenna port of the terminal device is digital domain beamforming, configure, for only uplink transmission, the pilot resource used for beam management and/or the QCL-typeD reference signal, and skip configure, for downlink transmission, the pilot resource used for beam management and/or the QCL-typeD reference signal.

Optionally, a quantity of guard symbols between the first SRS resource and the second SRS resource is less than Y symbols.

Optionally, the guard symbol is used by the terminal device to receive or send a signal.

Optionally, the first SRS resource includes a first SRS port and a second SRS port, and the second SRS resource includes a third SRS port and a fourth SRS port.

Optionally, the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

Optionally, the first configuration information further includes a third SRS resource, and a transmit antenna associated with the third SRS resource is different from transmit antennas associated with the first SRS resource and the second SRS resource.

Optionally, a guard symbol is configured between the foregoing different SRS resources, and at least one of the following is satisfied:
the first SRS resource and the third SRS resource are separated by at least Y symbols in the time domain; or
the second SRS resource and the third SRS resource are separated by the at least Y symbols in the time domain, where Y is an integer greater than or equal to 1.

Optionally, a value of Y is related to a subcarrier spacing.

In this embodiment, operations performed by the units in the communication apparatus are similar to the descriptions of the network device in the embodiments shown in FIG. 1A to FIG. 12, and details are not described herein again.

In this embodiment, the network device may determine information related to the antenna port of the terminal device by using the capability information reported by the terminal device, and the network device may configure the first SRS resource and the second SRS resource for the terminal device based on the capability information, to satisfy a requirement of measuring downlink channel state information when there is a discrepancy between uplink and downlink antenna structures of the terminal device. Further, a weight of sent downlink data is calculated to implement SRS-based downlink transmission and increase a cell-level or UE-level capacity.

FIG. 14 is another diagram of a structure of a communication apparatus 1400 according to this application. The communication apparatus 1400 includes a logic circuit 1401 and an input/output interface 1402. The communication apparatus 1400 may be a chip or an integrated circuit.

The transceiver unit 1301 shown in FIG. 13 may be a communication interface. The communication interface may be the input/output interface 1402 in FIG. 14, and the input/output interface 1402 may include an input interface and an output interface. Alternatively, the communication interface may be a transceiver circuit, and the transceiver circuit may include an input interface circuit and an output interface circuit. The processing unit 1302 shown in FIG. 13 may be the logic circuit 1401 in FIG. 14.

Optionally, when the communication apparatus is the terminal device in the foregoing embodiments, the logic circuit 1401 is configured to determine a first SRS resource and a second SRS resource based on first configuration information. The input/output interface 1402 is configured to receive the configuration information and send a first SRS and a second SRS. The configuration information includes a first SRS resource and a second SRS resource, and the first configuration information is used for downlink channel state information measurement or antenna switching. The first SRS resource is used to carry the first SRS, the second SRS resource is used to carry the second SRS, the first SRS resource is different from the second SRS resource, and a transmit beam of the first SRS resource is different from a transmit beam of the second SRS resource.

Optionally, when the communication apparatus is the network device in the foregoing embodiments, the logic circuit 1401 is configured to determine the first configuration information. The input/output interface 1402 is configured to receive capability information, send the first configuration information, and receive the first SRS and the second SRS.

The logic circuit 1401 and the input/output interface 1402 may further perform other steps performed by the terminal device or the network device in any embodiment, and achieve corresponding beneficial effects. Details are not described herein again.

Optionally, the logic circuit 1401 may be a processing apparatus, and some or all of functions of the processing apparatus may be implemented by using software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate arrays, FPGAs), an application-specific integrated chip (application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller (microcontroller unit, MCU), a programmable logic device (programmable logic device, PLD) or another integrated chip, or any combination of the foregoing chips or processors.

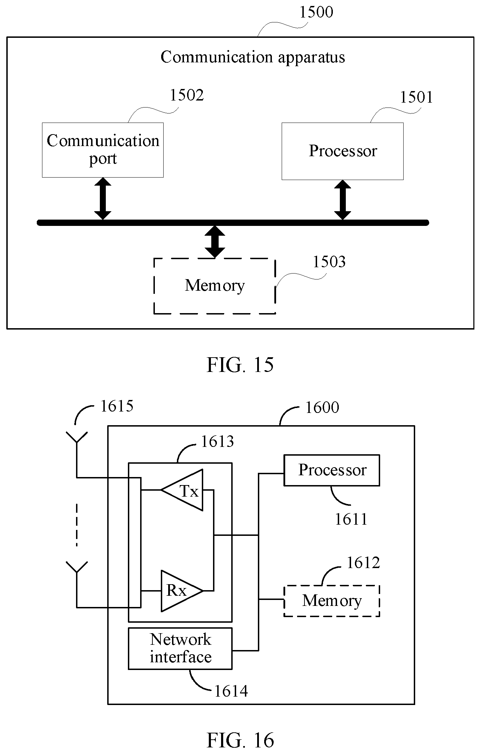

FIG. 15 shows a communication apparatus 1500 in the foregoing embodiments according to an embodiment of this application. The communication apparatus 1500 may be specifically the communication apparatus serving as a terminal device in the foregoing embodiments.

In a diagram of a possible logical structure of the communication apparatus 1500, the communication apparatus 1500 may include but is not limited to at least one processor 1501 and a communication port 1502.

The transceiver unit 1301 shown in FIG. 13 may be a communication interface. The communication interface may be the communication port 1502 in FIG. 15. The communication port 1502 may include an input interface and an output interface. Alternatively, the communication port 1502 may be a transceiver circuit, and the transceiver circuit may include an input interface circuit and an output interface circuit.

It may be understood that the communication port 1502 in FIG. 15 may send an SRS signal in a beam switching and/or antenna switching manner.

Further, optionally, the apparatus may include at least one of a memory 1503 and a bus. In this embodiment of this application, the at least one processor 1501 is configured to control and process an action of the communication apparatus 1500.

In addition, the processor 1501 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1500 shown in FIG. 15 may be specifically configured to implement steps implemented by the terminal device in the foregoing method embodiments, and implement technical effects corresponding to the terminal device. For a specific implementation of the communication apparatus shown in FIG. 15, refer to the descriptions in the foregoing method embodiments. Details are not described herein again.

FIG. 16 is a diagram of a structure of a communication apparatus 1600 in the foregoing embodiments according to an embodiment of this application. The communication apparatus 1600 may be specifically a communication apparatus serving as a network device in the foregoing embodiments. For a structure of the communication apparatus, refer to the structure shown in FIG. 16.

The communication apparatus 1600 includes at least one processor 1611 and at least one network interface 1614. Further, optionally, the communication apparatus further includes at least one memory 1612, at least one transceiver 1613, and one or more antennas 1615. The processor 1611, the memory 1612, the transceiver 1613, and the network interface 1614 are connected, for example, connected through a bus. In this embodiment of this application, the connection may include various types of interfaces, transmission lines, buses, or the like. This is not limited in this embodiment. The antenna 1615 is connected to the transceiver 1613. The network interface 1614 is configured to enable the communication apparatus to communicate with another communication device through a communication link. For example, the network interface 1614 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 1301 shown in FIG. 13 may be a communication interface. The communication interface may be the network interface 1614 in FIG. 16. The network interface 1614 may include an input interface and an output interface. Alternatively, the network interface 1614 may be a transceiver circuit, and the transceiver circuit may include an input interface circuit and an output interface circuit.

The processor 1611 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control the entire communication apparatus, execute the software program, and process the data of the software program. The processor 1611 in FIG. 16 may integrate functions of the baseband processor and the central processing unit. A person skilled in the art may understand that the baseband processor and the central processing unit may be processors independent of each other, and are interconnected by using a technology, for example, a bus. A person skilled in the art may understand that the communication apparatus may include a plurality of baseband processors to adapt to different network standards, the communication apparatus may include a plurality of central processing units to enhance a processing capability thereof, and components in the communication apparatus may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1612 may exist independently, and is connected to the processor 1611. Optionally, the memory 1612 may be integrated with the processor 1611, for example, integrated into a chip. The memory 1612 can store program code for executing the technical solutions in embodiments of this application, and the processor 1611 controls the execution. Various types of executed computer program code may also be considered as a driver of the processor 1611.

FIG. 16 shows only one memory and one processor. In an actual communication apparatus, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1613 may be configured to support receiving or sending of a radio frequency signal between the communication apparatus and a terminal. The transceiver 1613 may be connected to the antenna 1615. The transceiver 1613 includes a transmitter Tx and a receiver Rx. Specifically, the one or more antennas 1615 may receive a radio frequency signal. The receiver Rx of the transceiver 1613 is configured to: receive the radio frequency signal from the antenna, convert the radio frequency signal into a digital baseband signal or a digital intermediate frequency signal, and provide the digital baseband signal or the digital intermediate frequency signal to the processor 1611, so that the processor 1611 performs further processing, for example, demodulation and decoding, on the digital baseband signal or the digital intermediate frequency signal. In addition, the transmitter Tx of the transceiver 1613 is further configured to: receive a modulated digital baseband signal or digital intermediate frequency signal from the processor 1611, convert the modulated digital baseband signal or digital intermediate frequency signal into a radio frequency signal, and send the radio frequency signal through the one or more antennas 1615. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1613 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 1600 shown in FIG. 16 may be specifically configured to: implement steps implemented by the network device in the foregoing method embodiments, and implement technical effects corresponding to the network device. For a specific implementation of the communication apparatus 1600 shown in FIG. 16, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sounding reference signal SRS sending method, wherein the method is applied to a terminal device, and the method comprises:
receiving first configuration information from a network device, wherein the first configuration information indicates a first SRS resource and a second SRS resource, and the first configuration information is used for downlink channel state information measurement or indicates the terminal device to send an SRS in an antenna switching manner; and
sending a first SRS and a second SRS to the network device, wherein the first SRS resource is used to carry the first SRS, the second SRS resource is used to carry the second SRS, and a transmit beam of the first SRS resource is different from a transmit beam of the second SRS resource.

2. The method according to claim 1, wherein the first SRS resource comprises a first SRS port and a second SRS port, and the second SRS resource comprises a third SRS port and a fourth SRS port.

3. The method according to claim 1 or 2, wherein the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one SRS port of the first SRS resource is the same as a transmit antenna associated with at least one SRS port of the second SRS resource; or
a transmit beam associated with at least one SRS port of the first SRS resource is different from a transmit beam associated with at least one SRS port of the second SRS resource.

4. The method according to any one of claims 1 to 3, wherein the first configuration information further comprises a third SRS resource, and a transmit antenna associated with the third SRS resource is different from transmit antennas associated with the first SRS resource and the second SRS resource.

5. The method according to claim 4, wherein a guard symbol is configured between different SRS resources, and at least one of the following is satisfied:
the first SRS resource and the third SRS resource are separated by at least Y symbols in the time domain; or
the second SRS resource and the third SRS resource are separated by at least Y symbols in the time domain, wherein
Y is an integer greater than or equal to 1.

6. The method according to claim 5, wherein a value of Y is related to a subcarrier spacing.

7. The method according to any one of claims 1 to 6, wherein before the receiving the first configuration information from the network device, the method further comprises:
sending capability information related to an antenna port of the terminal device.

8. The method according to claim 7, wherein the capability information comprises at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain of the terminal device is different from a quantity of physical antennas associated with each transmit radio frequency chain of the terminal device; or
a downlink receive antenna structure of the terminal device is different from an uplink transmit antenna structure of the terminal device.

9. The method according to claim 8, wherein the beamforming manner comprises one or more of the following: digital domain beamforming, analog domain beamforming, and hybrid beamforming.

10. The method according to any one of claims 7 to 9, wherein a quantity of guard symbols between the first SRS resource and the second SRS resource is less than Y symbols.

11. The method according to claim 10, wherein the terminal device receives or sends a signal within the guard symbol.

12. A resource configuration method, wherein the method is applied to a network device, and the method comprises:
sending first configuration information to a terminal device, wherein the first configuration information indicates a first SRS resource and a second SRS resource, and the first configuration information is used for downlink channel state information measurement or indicates the terminal device to send an SRS in an antenna switching manner; and
receiving a first SRS and a second SRS from the terminal device, wherein the first SRS resource is used to carry the first SRS, the second SRS resource is used to carry the second SRS, and a transmit beam of the first SRS resource is different from a transmit beam of the second SRS resource.

13. The method according to claim 12, wherein the method further comprises:
receiving capability information from the terminal device, wherein the capability information is related to an antenna port of the terminal device.

14. The method according to claim 13, wherein the capability information comprises at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain of the terminal device is different from a quantity of physical antennas associated with each transmit radio frequency chain of the terminal device; or
a downlink receive antenna structure of the terminal device is different from an uplink transmit antenna structure of the terminal device.

15. The method according to claim 14, wherein the beamforming manner comprises one or more of the following: digital domain beamforming, analog domain beamforming, and hybrid beamforming.

16. The method according to any one of claims 13 to 15, wherein the method further comprises:
configuring, for the terminal device based on the capability information, a pilot resource used for beam management and/or a quasi co-location type QCL-typeD reference signal.

17. The method according to claim 16, wherein configuring, for the terminal device based on the capability information, the pilot resource used for beam management or the quasi co-location type QCL-typeD reference signal comprises:
when the beamforming manner of the transmit antenna port of the terminal device is hybrid beamforming and the beamforming manner of the receive antenna port of the terminal device is digital domain beamforming, configuring, for uplink transmission, the pilot resource used for beam management and/or the QCL-typeD reference signal, and skipping configuring, for downlink transmission, the pilot resource used for beam management and/or the QCL-typeD reference signal.

18. The method according to any one of claims 12 to 17, wherein a quantity of guard symbols between the first SRS resource and the second SRS resource is less than Y symbols.

19. The method according to claim 18, wherein the guard symbol is used by the terminal device to receive or send a signal.

20. A communication apparatus, wherein the communication apparatus comprises:
a transceiver unit, configured to receive first configuration information from a network device, wherein the first configuration information indicates a first SRS resource and a second SRS resource, and the first configuration information is used for downlink channel state information measurement or indicates the terminal device to send an SRS in an antenna switching manner; and
a processing unit, configured to generate a first SRS and a second SRS, wherein
the transceiver unit is further configured to send the first SRS and the second SRS to the network device, wherein the first SRS resource is used to carry the first SRS, the second SRS resource is used to carry the second SRS, and a transmit beam of the first SRS resource is different from a transmit beam of the second SRS resource.

21. The apparatus according to claim 20, wherein the first SRS resource comprises a first SRS port and a second SRS port, and the second SRS resource comprises a third SRS port and a fourth SRS port.

22. The apparatus according to claim 20 or 21, wherein the first SRS resource and the second SRS resource further satisfy at least one of the following:
a transmit antenna associated with the first SRS resource is the same as a transmit antenna associated with the second SRS resource;
a transmit beam associated with the first SRS resource is different from a transmit beam associated with the second SRS resource;
a transmit antenna associated with at least one antenna port of the first SRS resource is the same as a transmit antenna associated with at least one antenna port of the second SRS resource; or
a transmit beam associated with at least one antenna port of the first SRS resource is different from a transmit beam associated with at least one antenna port of the second SRS resource.

23. The apparatus according to any one of claims 20 to 22, wherein the first configuration information further comprises a third SRS resource, and a transmit antenna associated with the third SRS resource is different from transmit antennas associated with the first SRS resource and the second SRS resource.

24. The apparatus according to claim 23, wherein a guard symbol is configured between different SRS resources, and at least one of the following is satisfied:
the first SRS resource and the third SRS resource are separated by at least Y symbols in the time domain; or
the second SRS resource and the third SRS resource are separated by the at least Y symbols in the time domain, wherein
Y is an integer greater than or equal to 1.

25. The apparatus according to claim 24, wherein a value of Y is related to a subcarrier spacing.

26. The apparatus according to any one of claims 20 to 25, wherein the transceiver unit is further configured to send capability information related to an antenna port of the communication apparatus.

27. The apparatus according to claim 26, wherein the capability information comprises at least one of the following:
a beamforming manner of a receive antenna port of the communication apparatus is different from a beamforming manner of a transmit antenna port of the communication apparatus;
a quantity of transmit antennas associated with one uplink pilot port of the communication apparatus is not equal to a quantity of receive antennas associated with one downlink pilot port of the communication apparatus;
a downlink sending capability of the communication apparatus is different from an uplink receiving capability of the communication apparatus;
a quantity of downlink receive antenna ports of the communication apparatus is different from a quantity of uplink transmit antenna ports of the communication apparatus;
a quantity of physical antennas associated with each receive radio frequency chain of the communication apparatus is different from a quantity of physical antennas associated with each transmit radio frequency chain of the communication apparatus; or
a downlink receive antenna structure of the communication apparatus is different from an uplink transmit antenna structure of the communication apparatus.

28. The apparatus according to claim 27, wherein the beamforming manner comprises one or more of the following: digital domain beamforming, analog domain beamforming, and hybrid beamforming.

29. The apparatus according to any one of claims 26 to 28, wherein a quantity of guard symbols between the first SRS resource and the second SRS resource is less than Y symbols.

30. The apparatus according to claim 29, wherein the transceiver unit is further configured to receive or send a signal in the guard symbol.

31. A communication apparatus, wherein the communication apparatus comprises:
a processing unit, configured to determine first configuration information, wherein the first configuration information indicates a first SRS resource and a second SRS resource, and the first configuration information is used for downlink channel state information measurement or indicates the terminal device to send an SRS in an antenna switching manner; and
a transceiver unit, configured to send the first configuration information to the terminal device, wherein
the transceiver unit is further configured to receive a first SRS and a second SRS from the terminal device, wherein the first SRS resource is used to carry the first SRS, the second SRS resource is used to carry the second SRS, and a transmit beam of the first SRS resource is different from a transmit beam of the second SRS resource.

32. The communication apparatus according to claim 31, wherein
the transceiver unit is further configured to receive capability information from the terminal device, wherein the capability information is related to an antenna port of the terminal device.

33. The communication apparatus according to claim 32, wherein the capability information comprises at least one of the following:
a beamforming manner of a receive antenna port of the terminal device is different from a beamforming manner of a transmit antenna port of the terminal device;
a quantity of transmit antennas associated with one uplink pilot port of the terminal device is not equal to a quantity of receive antennas associated with one downlink pilot port of the terminal device;
a quantity of downlink receive antenna ports of the terminal device is different from a quantity of uplink transmit antenna ports of the terminal device;
a quantity of physical antennas associated with each receive radio frequency chain of the terminal device is different from a quantity of physical antennas associated with each transmit radio frequency chain of the terminal device; or
a downlink receive antenna structure of the terminal device is different from an uplink transmit antenna structure of the terminal device.

34. The communication apparatus according to claim 33, wherein the beamforming manner comprises one or more of the following: digital domain beamforming, analog domain beamforming, and hybrid beamforming.

35. The communication apparatus according to any one of claims 32 to 34, wherein
the processing unit is further configured to determine, based on the capability information, a pilot resource used for beam management and/or a quasi co-location type QCL-typeD reference signal; and
the transceiver unit is further configured to configure, for the terminal device, the pilot resource used for beam management and/or the quasi co-location type QCL-typeD reference signal.

36. The communication apparatus according to claim 35, wherein
the transceiver unit is further configured to: when the beamforming manner of the transmit antenna port of the terminal device is hybrid beamforming and the beamforming manner of the receive antenna port of the terminal device is digital domain beamforming, configure, for uplink transmission, the pilot resource used for beam management and/or the QCL-typeD reference signal, and skip configure, for downlink transmission, the pilot resource used for beam management and/or the QCL-typeD reference signal.

37. The communication apparatus according to any one of claims 31 to 36, wherein a quantity of guard symbols between the first SRS resource and the second SRS resource is less than Y symbols.

38. The communication apparatus according to claim 37, wherein the guard symbol is used by the terminal device to receive or send a signal.

39. A communication apparatus, comprising at least one processor, wherein the at least one processor is coupled to a memory, and the at least one processor is configured to perform the method according to any one of claims 1 to 11.

40. The communication apparatus according to claim 39, wherein the communication apparatus is a chip.

41. A communication apparatus, comprising at least one processor, wherein the at least one processor is coupled to a memory, and the at least one processor is configured to perform the method according to any one of claims 12 to 19.

42. The communication apparatus according to claim 40, wherein the communication apparatus is a chip.

43. A communication system, comprising the communication apparatus according to claim 40 and the communication apparatus according to claim 41.

44. A computer-readable storage medium, wherein the storage medium stores a computer program or instructions, and when the computer program or the instructions are executed by a communication apparatus, the method according to any one of claims 1 to 19 is implemented.

45. A computer program product, comprising instructions, wherein when the instructions are run on a computer, the computer is enabled to perform the method according to any one of claims 1 to 19.
